# EUROPÄISCHE PATENTSCHRIFT

(11) **EP 4 332 304 B1**
(45) Veröffentlichungstag und Bekanntmachung des Hinweises auf die Patenterteilung: **31.12.2025**
(21) Anmeldenummer: 23194878.7
(22) Anmeldetag: 01.09.2023
(51) Int. Cl.: E01C 23/088, B60K 25/00

(54) **SELBSTFAHRENDE BODENBEARBEITUNGSMASCHINE MIT ZWILLINGSMOTOREN UND VERFAHREN ZUM BETRIEB DER BODENBEARBEITUNGSMASCHINE**
SELF-PROPELLED GROUND WORKING MACHINE WITH TWIN MOTORS AND METHOD FOR OPERATING THE GROUND WORKING MACHINE
MACHINE AUTOMOTRICE DE TRAITEMENT DU SOL AVEC MOTEURS JUMELÉS ET PROCÉDÉ DE FONCTIONNEMENT DE LADITE MACHINE

(30) Priorität: 05.09.2022 DE 102022122472
(43) Veröffentlichungstag der Anmeldung: 06.03.2024
(73) Patentinhaber: Wirtgen GmbH, 53578 Windhagen (DE)
(72) Erfinder: Berning, Christian, 53909 Zülpich (DE); Gaertner, Olaf, 53545 Linz (Rhein) (DE); Mittelstädt, Christopher, 53577 Neustadt (Wied) (DE)
(74) Vertreter: Ruttensperger Lachnit Trossin Gomoll

(56) Entgegenhaltungen:
- EP-B1- 1 983 105
- DE-A1- 102012 006 189
- DE-A1- 102012 012 738
- DE-U1- 202015 004 528

## Beschreibung

Die vorliegende Erfindung betrifft eine selbstfahrende Bodenbearbeitungsmaschine mit einem Maschinenrahmen, welcher von einem Fahrwerk getragen ist, wobei das Fahrwerk auf einem Untergrund aufsteht und eine Mehrzahl von auf dem Untergrund abrollbaren Laufwerken aufweist.

An dem Maschinenrahmen ist eine zur Bodenbearbeitung ausgebildete Arbeitsvorrichtung als ein erster Leistungsempfänger aufgenommen, wobei die Arbeitsvorrichtung relativ zum Maschinenrahmen zu einer Arbeitsbewegung antreibbar ist.

An dem Maschinenrahmen ist wenigstens eine von der Arbeitsvorrichtung verschiedene Funktionsvorrichtung als ein weiterer Leistungsempfänger aufgenommen.

Am Maschinenrahmen ist eine Antriebsanordnung aufgenommen, welche eine Arbeits-Antriebsleistung der Arbeitsvorrichtung sowie eine Funktions-Antriebsleistung der wenigstens einen Funktionsvorrichtung der Bodenbearbeitungsmaschine bereitstellt.

Zwischen der Antriebsanordnung und der Arbeitsvorrichtung ist ein Arbeitsgetriebe angeordnet, um Drehmoment zwischen der Antriebsanordnung und der Arbeitsvorrichtung zu übertragen. Zwischen der Antriebsanordnung und der wenigstens einen Funktionsvorrichtung ist ein Funktionsgetriebe angeordnet, um Drehmoment zwischen der Antriebsanordnung und der wenigstens einen Funktionsvorrichtung zu übertragen.

Die Antriebsanordnung umfasst einen ersten Motor und einen zweiten Motor, von welchen jeder durch das Arbeitsgetriebe mit der Arbeitsvorrichtung zur Übertragung von Drehmoment derart verbunden ist, dass die Arbeitsvorrichtung zur Ausführung einer bestimmungsgemäßen Bodenbearbeitung nur durch den ersten Motor oder nur durch den zweiten Motor oder durch den ersten und den zweiten Motor gemeinsam zur Arbeitsbewegung antreibbar ist.

Eine solche Bodenbearbeitungsmaschine in Gestalt einer Straßenfräsmaschine ist aus der EP 1 983 105 B1 bekannt.

Diese Druckschrift gibt an, dass der erste und der zweite Motor baugleich oder unterschiedlich sein können. Im Falle der Verwendung unterschiedlicher Motoren ist in der Regel der Wartungsaufwand der Antriebsanordnung erhöht, da für jeden der beiden Motoren andere Wartungsvorgaben gelten können, Wartungspersonal entsprechend geschult werden muss und für jeden Motor gesonderte Ersatzteile beschafft werden müssen, welche unter den Motoren nicht austauschbar sind. Im Falle der Verwendung baugleicher Motoren ist zwar der Wartungsaufwand geringer, aber dafür ist die Bandbreite der Nutzbarkeit der Antriebsanordnung eingeschränkt, da beispielsweise sowohl der erste als auch der zweite Motor innerhalb des im Wesentlichen identischen nutzbaren Drehzahlbereichs, abgesehen von herstellungs- und montagetoleranzbedingten geringen bis vernachlässigbaren Unterschieden, die gleiche Drehzahl-Drehmoment-Kennlinie aufweisen.

Aus der DE 10 2012 006 189 A1 ist eine Bodenbearbeitungsmaschine, wiederum in Gestalt einer Straßenfräse, bekannt, deren Antriebsanordnung einen leistungsstärkeren Hauptantrieb und einen leistungsschwächeren Nebenantrieb aufweist, deren Drehmomentpfade über ein Planetengetriebe als Summiergetriebe zur Arbeitsvorrichtung führen. Somit ist es möglich, durch den Nebenantrieb die Arbeitsvorrichtung während eines Wartungsbetriebs mit geringer Drehzahl zu drehen und während eines Bodenbearbeitungsbetriebs mit höherer Drehzahl und insbesondere mit höherer Leistung zu drehen. Ebenso ist es möglich, die Fräswalze mit dem Nebenantrieb zunächst auf eine Drehzahl zu beschleunigen, bei welcher der Hauptantrieb zur weiteren rotatorischen Beschleunigung der Fräswalze zugeschaltet werden kann. Während einer bestimmungsgemäßen Bodenbearbeitung wird die Fräswalze allerdings stets alleine durch den Hauptantrieb angetrieben. Der Nebenantrieb ist nicht dafür ausgelegt und ausgebildet, die Fräswalze während einer bestimmungsgemäßen Bodenbearbeitung anzutreiben.

Aus der DE 10 2015 002 743 A1 ist eine weitere Bodenbearbeitungsmaschine mit einer Fräswalze bekannt. Die bekannte Bodenbearbeitungsmaschine weist eine Steuervorrichtung auf, welche dazu ausgebildet ist, die Drehzahl der Fräswalze in Abhängigkeit von mindestens einer für einen kritischen Betriebszustand der Fräswalze charakteristischen Messgröße, etwa einem Lastmoment als Funktion der Zeit während des Betriebs, an die Betriebsbedingungen der Bodenbearbeitungsmaschine derart anzupassen, dass die Fräswalze in einem nicht kritischen Betriebszustand betrieben wird. Die so erzielte adaptive Steuerung der Fräswalzendrehzahl erlaubt den Betrieb der Bodenbearbeitungsmaschine im Hinblick auf die Fräswalzendrehzahl an einem optimalen Arbeitspunkt. Die charakteristische Messgröße wird von einer zu ihrer Erfassung vorgesehenen Signalaufnahmeeinheit erfasst und an die Steuervorrichtung übertragen.

Aus der DE 10 2015 111 249 A1 ist eine Straßenfräsmaschine als Bodenbearbeitungsmaschine bekannt, deren Steuervorrichtung dazu ausgebildet ist, Maschinenparameter, mit denen die Bodenbearbeitungsmaschine betrieben wird, unter Berücksichtigung von Materialeigenschaften des zu bearbeitenden Untergrundes derart einzustellen, dass ein vorteilhaftes Verschleißverhalten der eingesetzten Bodenbearbeitungswerkzeuge vorliegt.

Aus der DE 10 2012 012 738 A1 ist eine Straßenfräsmaschine als Bodenbearbeitungsmaschine mit einer Brennkraftmaschine als Hauptantrieb bekannt. Eine Hydraulikpumpe, welche im herkömmlichen Fräsbetrieb mittels eines zwischenangeordneten 2-stufigen Verteilergetriebes vom Hauptantrieb angetrieben wird, kann dann, wenn der Hauptantrieb vom Verteilergetriebe abgekuppelt ist, als Hydraulikmotor betrieben werden. Die als Hydraulikmotor betriebene Hydraulikpumpe bildet einen Hilfsantrieb für Wartungsarbeiten an der als Fräswalze ausgebildeten Arbeitsvorrichtung oder zur Synchronisation der Fräswalzendrehzahl auf eine Drehzahl des Hauptantriebs vor dem Einkuppeln des Hauptantriebs bei gleichzeitigem Auskuppeln des Hilfsantriebs.

DE 10 2012 012 738 A1 nennt ganz allgemein auch die Möglichkeit, die Antriebsleistungen zweier Brennkraftmaschinen über ein Getriebe zu summieren, ohne jedoch hierfür näher auf den Getriebeaufbau einzugehen.

DE 20 2015 004528 U1 beschreibt eine Arbeitsmaschine mit einem Verbrennungsmotor, der über ein Leistungsverzweigungsgetriebe ein Arbeitsaggregat antreibt. Dabei wird ein mechanischer Leistungszweig mit einem elektrischen oder hydraulischen Leistungszweig in einem Summiergetriebe zusammengeführt, wodurch ein variables Übersetzungsverhältnis einstellbar ist. Zur Effizienzsteigerung kann der elektrische bzw. hydraulische Leistungszweig über eine Sperrvorrichtung überbrückt und das Arbeitsaggregat allein mechanisch angetrieben werden.

Ausgehend von der oben genannten EP 1 983 105 B1 ist es Aufgabe der vorliegenden Erfindung, die bekannte Bodenbearbeitungsmaschine so zu verbessern, dass sie einen betragsmäßig größeren Betriebsparameterbereich nutzen kann, in welchem sie während einer Bodenbearbeitung betrieben werden kann. Damit können durch gezieltere Einstellung von Betriebsparametern für eine Bodenbearbeitung Ressourcen eingespart und Wartungszyklen verlängert werden.

Diese Aufgabe löst die vorliegende Erfindung ausgehend von einer eingangs geschilderten Bodenbearbeitungsmaschine dadurch, dass das Arbeitsgetriebe den ersten Motor mit einem ersten Übertragungsverhältnis mit der Arbeitsvorrichtung verbindet und den zweiten Motor mit einem vom ersten verschiedenen zweiten Übertragungsverhältnis mit der Arbeitsvorrichtung verbindet.

Durch die Verwendung unterschiedlicher Übertragungsverhältnisse bei der Übertragung von Motorleistung des ersten und des zweiten Motors zur Arbeitsvorrichtung kann eine Spreizung der Beiträge des ersten und des zweiten Motors zur gesamten Antriebsleistung der Antriebsanordnung erzielt werden, welche wegen der unterschiedlichen Übertragungsverhältnisse selbst bei einer vorteilhaften Verwendung identischer bzw. baugleicher Motoren als der erste und der zweite Motor eintritt.

Eine besonders große Spreizung der zur Arbeitsvorrichtung übertragenen Motorenleistung kann durch die Verwendung unterschiedlicher Motoren erzielt werden, welche jeweils eine unterschiedliche Motorleistung und dabei bevorzugt betragsmäßig unterschiedliche nutzbare Drehzahlbereiche aufweisen können. Die Arbeitsvorrichtung kann dann während einer bestimmungsgemäßen Bodenbearbeitung innerhalb eines betragsmäßig besonders umfangreichen Drehzahlbandes betrieben werden. Die Motoren können unterschiedlich sein, aber auf den gleichen physikalischen Wirkprinzipien beruhen. Beispielsweise können beide Motoren Brennkraftmaschinen sein. Es soll jedoch nicht ausgeschlossen sein, dass die Motoren auf unterschiedlichen physikalischen Wirkprinzipien beruhend Antriebsleistung ausgeben.

Der erste und der zweite Motor weisen dabei bevorzugt jeweils eine Nenn-Leistung im Bereich von 150 bis 800 kW auf, stärker bevorzugt im Bereich von 300 bis 750 kW, besonders bevorzugt von 550 bis 650 kW.

Da jedoch durch die Bereitstellung unterschiedlicher Übertragungsverhältnisse für den ersten und den zweiten Motor bereits für eine Spreizung des an der Arbeitsvorrichtung verfügbaren Drehzahlbandes gesorgt ist und da weiter die Verwendung baugleicher Motoren als der erste und der zweite Motor den Vorteil einer erheblichen Verringerung an Wartungsaufwand bietet, sind der erste und der zweite Motor vorzugsweise baugleiche Motoren. Als baugleich gelten dabei insbesondere Motoren, welche vom selben Motorenhersteller unter identischer Modellbezeichnung angeboten und vertrieben werden, auch wenn sich die Motoren hinsichtlich einzelner Komponenten unterscheiden können, welche ihre Nenn-Leistung und ihr Nenn-Betriebsverhalten nicht nennenswert beeinflussen. Es ist in der Motorenherstellung nicht unüblich, aus Gründen der Versorgungssicherheit für einzelne Komponenten zwei Lieferquellen zu verpflichten, welche zwar im Wesentlichen wirkungsgleiche, aber nominal nicht identische Komponenten für ein und dasselbe Motorenmodell liefern.

Bevorzugt sind der erste und der zweite Motor jeweils Brennkraftmaschinen, besonders bevorzugt Dieselkraftmaschinen. Diese können während des bestimmungsgemäßen Bodenbearbeitungsbetriebs an ihrem nach vorgegebenen Randbedingungen optimalen Betriebspunkten betrieben werden, etwa besonders emissionsarm oder besonders verbrauchsarm.

Grundsätzlich soll nicht ausgeschlossen sein, dass einer der oder beide Motoren andere physikalische Wirkprinzipien benutzen und beispielsweise als Elektromotoren ausgebildet sein können. Allerdings haben thermische Kraftmaschinen bei gleicher Nennleistung ein in der Regel engeres Drehzahlband, in welchem sie betrieben werden können und sind aufgrund der zu ihrem Betrieb notwendigen Verbrennungsvorgänge weniger frei regelbar als Elektromotoren. Daher macht die hier vorgestellte Verwendung des Arbeitsgetriebes mit unterschiedlichen Übertragungsverhältnissen für die beiden genannten Motoren besonders für thermische Kraftmaschinen Sinn.

Die Bodenbearbeitungsmaschine kann beispielsweise eine Straßenfräsmaschine, ein Recycler, ein Stabilisierer oder ein Surface-Miner sein. Alle diese Bodenbearbeitungsmaschinen weisen eine eingangs genannte Arbeitsvorrichtung auf, welche, in Bewegung versetzt, zur Bodenbearbeitung ausgebildet ist. Genauer weisen alle diese Bodenbearbeitungsmaschinen eine Arbeitsvorrichtung auf, welche zur abtragenden Bodenbearbeitung ausgebildet ist, wie etwa eine um eine Fräsachse drehbare Fräswalze. Die Arbeitsbewegung ist daher bevorzugt eine rotatorische Arbeitsbewegung, wenngleich eine davon abweichende Arbeitsbewegung, etwa eine unter Verwendung eines Exzentergetriebes mögliche reziprozierende translatorische oder/- und rotatorische Arbeitsbewegung, nicht grundsätzlich ausgeschlossen sein soll.

Grundsätzlich können die unterschiedlichen Übertragungsverhältnisse im Arbeitsgetriebe konstruktiv in beliebiger Weise bereitgestellt sein. Eine bevorzugt robuste konstruktive Ausgestaltung des Arbeitsgetriebes mit unterschiedlichen Übertragungsverhältnissen für den ersten und für den zweiten Motor kann dadurch erhalten werden, dass die unterschiedlichen Übertragungsverhältnisse des Arbeitsgetriebes im Zusammenwirken mit dem ersten und dem zweiten Motor durch rotierende Getriebebauteile mit jeweils unterschiedlichen wirksamen Durchmessern bewirkt sind. Das rotierende Getriebebauteil kann beispielsweise wenigstens ein Bauteil sein aus einem Zahnrad, einem Reibrad und einer Riemenscheibe.

Da die vorliegend diskutierte Bodenbearbeitungsmaschine dann, wenn eine besonders hohe Fräsleistung erforderlich ist, die Antriebsleistung sowohl des ersten als auch des zweiten Motors über das Arbeitsgetriebe an die Arbeitsvorrichtung überträgt, ist zunächst in diesem Betriebszustand mit Leistungsabgabe beider Motoren an die Arbeitsvorrichtung jedes drehmomentübertragende Getriebebauteil des Arbeitsgetriebes wenigstens mittelbar mit jedem Motor zur gemeinsamen Bewegung verbunden. Dabei bedeutet eine Verbindung zur gemeinsamen Bewegung zweier Bauteile, dass sich aufgrund der körperlichen Verbindung stets das eine Bauteil dreht, wenn sich das andere Bauteil dreht.

Genauer ist bevorzugt ein erstes rotierendes Getriebebauteil mit einem ersten wirksamen Durchmesser zur gemeinsamen Drehung mit dem ersten Motor verbunden und ist ein zweites rotierendes Getriebebauteil mit einem vom ersten verschiedenen zweiten wirksamen Durchmesser zur gemeinsamen Drehung mit dem zweiten Motor verbunden. Dabei ist das erste rotierende Getriebebauteil im Drehmomentpfad vom ersten Motor zum zweiten rotierenden Getriebebauteil zwischen dem ersten Motor und dem zweiten rotierenden Getriebebauteil gelegen und ist das zweite rotierende Getriebebauteil im Drehmomentpfad vom zweiten Motor zum ersten rotierenden Getriebebauteil zwischen dem zweiten Motor und dem ersten rotierenden Getriebebauteil gelegen. Auf diese Weise können trotz wenigstens mittelbarer Verbindung aller drehmomentübertragenden Getriebebauteile des Arbeitsgetriebes mit sowohl im ersten als auch dem zweiten Motor die gewünschten unterschiedlichen Übertragungsverhältnisse zwischen dem ersten Motor und der Arbeitsvorrichtung einerseits und dem zweiten Motor und der Arbeitsvorrichtung andererseits realisiert sein.

Bevorzugt umfasst oder ist das Arbeitsgetriebe ein Zugmittelgetriebe. Grundsätzlich kann das Zugmittelgetriebe ein formschlüssiges Zugmittelgetriebe sein. Dann kann das Zugmittel des Arbeitsgetriebes beispielsweise eine Kette, wie etwa eine Rollen- oder Laschenkette, oder ein Zahnriemen sein. Bevorzugt ist das Zugmittelgetriebe ein kraftschlüssiges Zugmittelgetriebe, sodass grundsätzlich die Möglichkeit von Schlupf zwischen dem Zugmittel und wenigstens einem Getriebebauteil besteht. Wenngleich Schlupf im Arbeitsgetriebe nicht erwünscht ist, kann gerade dann, wenn beide Motoren gleichzeitig über das Arbeitsgetriebe Leistung an die Arbeitsvorrichtung übertragen, Schlupf momentane Leistungsunterschiede nivellieren, ohne Getriebebauteile des Arbeitsgetriebes oder leistungsabgebende Ausgangswellen des ersten oder des zweiten Motors übermäßig zu beanspruchen. So können Belastungsspitzen an Getriebebauteilen oder am ersten oder zweiten Motor durch Schlupf kurzzeitig reduziert werden.

Die verwendeten Ordinalzahlen "erster", "erste" und "erstes" sowie "zweiter", "zweite" und "zweites" bezeichnen keine Reihenfolge, sondern unterscheiden nur ansonsten gleichartige Bauteile und Bauteilabschnitte und deuten deren funktionale oder/und konstruktive Zuordnung zu entweder dem ersten oder dem zweiten Motor an. Von jenen Bauteilen und Bauteilabschnitten, von welchen gemäß der vorliegenden Beschreibung nur das erste oder nur das zweite vorhanden sein kann, kann in der Regel ein dem zweiten Motor zugeordnetes zweites Bauteil vorhanden sein, ohne dass deshalb zwingend ein gleichartiges erstes Bauteil vorhanden sein muss. Das Nämliche gilt für Bauteilabschnitte anstelle von Bauteilen.

Konstruktiv kann in vorteilhaft einfacher und ebenso zuverlässiger Weise das erste rotierende Getriebebauteil wenigstens ein Getriebebauteil sein aus
i) einer ersten ein Zugmittel des Zugmittelgetriebes umlenkenden Umlenkrolle und
ii) einem ersten in einem Drehmomentpfad vom ersten Motor zur ersten Umlenkrolle angeordneten Zahnrad oder Reibrad.

Bevorzugt ist dabei die Option i), bei welcher die Umlenkrolle bevorzugt ohne Zwischenanordnung einer weiteren Getriebestufe mit der Ausgangswelle des ersten Motors drehzahlgleich dreht. Hierdurch wird die geringste Bauteileanzahl zur Realisierung der Eingangsseite des Arbeitsgetriebes für die Einleitung von Drehmoment des ersten Motors in das Arbeitsgetriebe erreicht.

Wenn allerdings, etwa aufgrund von Randbedingungen des verfügbaren Bauraums, ein Abstand orthogonal zur Drehachse der Ausgangswelle des ersten Motors überbrückt werden muss, um zur ersten Umlenkrolle zu gelangen, kann die Option ii) gewählt werden. In der Regel ist dann eine Getriebestufe zwischen dem ersten Motor und der ersten Umlenkrolle realisiert, in welcher die Leistung des ersten Motors unter Veränderung der unmittelbar vom ersten Motor abgegebenen Drehzahl und Drehmoment an die erste Umlenkrolle übertragen wird.

Die Optionen i) und ii) können erforderlichenfalls auch kombiniert angewendet werden, etwa unter Verwendung einer Getriebestufe zwischen dem ersten Motor und der Umlenkrolle zur Erzielung eines radialen Versatzes des Drehmomentpfads, wobei ein Teil des Übertragungsverhältnisses des Arbeitsgetriebes für den ersten Motor von der Getriebestufe und ein weiterer Teil von der Umlenkrolle bewirkt sind.

Das zum ersten Motor und dem ersten rotierenden Getriebebauteil Gesagte kann zusätzlich oder alternativ auch für den zweiten Motor und das zweite rotierende Getriebebauteil gelten. Dementsprechend kann das zweite rotierende Getriebebauteil wenigstens ein Getriebebauteil sein aus
iii) einer zweiten ein Zugmittel des Zugmittelgetriebes umlenkenden Umlenkrolle und
iv) einem zweiten in einem Drehmomentpfad vom zweiten Motor zur zweiten Umlenkrolle angeordneten Zahnrad oder Reibrad.

Für den zweiten Motor und das zweite rotierende Getriebebauteil gilt das oben zum ersten Motor und zum ersten rotierenden Getriebebauteil Gesagte mutatis mutandis entsprechend.

Beispielsweise kann das Übertragungsverhältnis der Motorleistung des einen Motors aus erstem und zweitem Motor über das Arbeitsgetriebe zur Arbeitsvorrichtung eine Drehzahluntersetzung bzw. Drehmomentübersetzung mit einem Übertragungsverhältnis im Bereich von 13,5:1 bis 16,5:1, insbesondere von 14:1 bis 16:1 sein.

Ebenso kann das Übertragungsverhältnis der Motorleistung des jeweils anderen Motors aus erstem und zweitem Motor eine Drehzahluntersetzung bzw. Drehmomentübersetzung mit einem Übertragungsverhältnis im Bereich von 17,5:1 bis 20,5:1 sein, insbesondere von 18:1 bis 20:1.

Zusätzlich zu dem Zugmittelgetriebe kann das Arbeitsgetriebe ein im Drehmomentpfad zwischen einer der Arbeitsvorrichtung zugeordneten dritten Umlenkrolle und der Arbeitsvorrichtung wirkendes Planetengetriebe umfassen. Bevorzugt wirkt das Planetengetriebe drehzahluntersetzend und drehmomentübersetzend.

Grundsätzlich kann der erste oder der zweite Motor unmittelbar Leistung in das Funktionsgetriebe einleiten. **In** einer bevorzugten Ausführungsform leitet jener Motor unmittelbar Leistung in das Funktionsgetriebe ein, welcher das betragsmäßig größere drehzahluntersetzende Übertragungsverhältnis aufweist. Sind der erste und der zweite Motor baugleich im Sinne dieser Anmeldung, bewirkt der Motor mit dem größeren drehzahluntersetzenden Übertragungsverhältnis des Arbeitsgetriebes an der Arbeitsvorrichtung die langsamere Arbeitsbewegung.

Wie eingangs dargelegt wurde, kann die Arbeitsvorrichtung nur durch den ersten Motor oder nur durch den zweiten Motor oder durch den ersten und den zweiten Motor gemeinsam zur Antriebsbewegung angetrieben werden. Daher ist in einer bevorzugten Ausführungsform der vorliegenden Erfindung zur Verwirklichung dieser unterschiedlichen Betriebsmodi in einem ersten Drehmomentpfad zwischen dem ersten Motor und der Arbeitsvorrichtung eine erste schaltbare Kupplung angeordnet, um den ersten Drehmomentpfad abhängig vom Schaltzustand der ersten schaltbaren Kupplung zu unterbrechen oder zu schließen. Somit kann der zweite Motor alleine das Drehmoment für die Bewegung der Arbeitsvorrichtung liefern, ohne den ersten Motor schleppen zu müssen.

Alternativ oder bevorzugt zusätzlich kann in einem zweiten Drehmomentpfad zwischen dem zweiten Motor und der Arbeitsvorrichtung eine zweite schaltbare Kupplung angeordnet sein, um den zweiten Drehmomentpfad abhängig vom Schaltzustand der zweiten schaltbaren Kupplung zu unterbrechen oder zu schließen. Dies ermöglicht, die Arbeitsvorrichtung alleine durch den ersten Motor anzutreiben, ohne dass dieser den zweiten Motor schleppen muss.

Die wenigstens eine Funktionsvorrichtung, welche über das vom Arbeitsgetriebe verschiedene Funktionsgetriebe angetrieben wird, leistet unabhängig von einer Bodenbearbeitung durch die Arbeitsvorrichtung einen wichtigen Beitrag für den Betrieb der Bodenbearbeitungsmaschine. So kann durch Antreiben einer Hydraulikpumpe als Funktionsvorrichtung Hydraulikdruck für hydraulische Vorrichtungen bereitgestellt werden, beispielsweise für Hubeinrichtungen zum Heben und Senken des Maschinenrahmens relativ zum Fahrwerk, zur Lenkung einzelner Laufwerke sowie als Antrieb von Hydromotoren und damit zur Bereitstellung von Vortrieb an den einzelnen Laufwerken und folglich an der Arbeitsvorrichtung. Ebenso kann durch Antreiben eines elektrischen Generators als einer möglichen Funktionsvorrichtung elektrischer Strom für elektrische Verbraucher der Bodenbearbeitungsmaschine bereitgestellt werden, etwa für die Beleuchtung und die Steuerung der Bodenbearbeitungsmaschine. Ebenso kann durch Antreiben einer Pneumatikpumpe Pneumatikdruck für pneumatische Vorrichtungen, etwa für pneumatische Kolben-ZylinderAnordnungen, bereitgestellt werden.

Um sicherzugehen, dass die Funktionsvorrichtungen unabhängig vom Betrieb der Arbeitsvorrichtung angetrieben werden können, gilt bevorzugt für einen Motor aus erstem und zweitem Motor, dass die in dem Drehmomentpfad zwischen dem einen Motor und der Arbeitsvorrichtung angeordnete schaltbare Kupplung abhängig von ihrem Schaltzustand eine Übertragung von Drehmoment von dem einen Motor zur Arbeitsvorrichtung unterbricht, aber eine Übertragung von Drehmoment von dem einen Motor zum Funktionsgetriebe nicht unterbricht. Da durch das Arbeitsgetriebe der erste und der zweite Motor kinematisch gekoppelt sind, ist grundsätzlich jede unmittelbar durch einen der beiden Motoren antreibbare Vorrichtung mittelbar auch durch den anderen Motor antreibbar. Bevorzugt ist das Funktionsgetriebe einem der beiden Motoren aus erstem und zweitem Motor zugeordnet, sodass gemäß einer bevorzugten Weiterbildung der vorliegenden Erfindung für den jeweils anderen Motor aus erstem und zweitem Motor gilt, dass die in dem Drehmomentpfad zwischen dem anderen Motor und der Arbeitsvorrichtung angeordnete schaltbare Kupplung abhängig von ihrem Schaltzustand sowohl eine Übertragung von Drehmoment von dem anderen Motor zur Arbeitsvorrichtung als auch zum Funktionsgetriebe unterbricht.

Das Funktionsgetriebe kann in an sich bekannter Weise ein Verteilergetriebe sein, dessen Anzahl an Ausgangswellen größer als dessen Anzahl an Eingangswellen ist. Bevorzugt hat das Funktionsgetriebe nur eine Eingangswelle, in die ein Motor aus erstem und zweitem Motor unmittelbar Drehmoment einleitet. Ebenso hat das Funktionsgetriebe bevorzugt mehr als eine Ausgangswelle, um mehr als nur eine Funktionsvorrichtung anzutreiben. Da die eingangs genannten Bodenbearbeitungsmaschinen in einem erheblichen Umfang Hydraulikdruck als Energiequelle für Funktionsaggregate nutzen, sind an dem Verteilergetriebe bevorzugt eine Mehrzahl von Hydraulikpumpen oder/und von Gaspumpen, insbesondere Pneumatikpumpen, angeordnet. Aus diesem Grunde wird das Funktionsgetriebe in der Fachwelt häufig als Pumpenverteilergetriebe bezeichnet.

Wie oben bereits erläutert wurde, kann die wenigstens eine Funktionsvorrichtung wenigstens eine Flüssigkeitspumpe oder/und wenigstens eine Gaspumpe oder/und wenigstens einen elektrischen Generator oder/und wenigstens einen mechanischen Hilfsantrieb umfassen oder sein.

Besonders bevorzugt verfügt die Bodenbearbeitungsmaschine über einen von den beiden Motoren unabhängigen Hilfsantrieb zum Antrieb der Fräswalze im Wartungsbetrieb. Im Wartungsbetrieb soll eine Rotation der Fräswalze mit gegenüber dem Arbeitsbetrieb deutlich reduzierter Drehzahl und Drehmoment erfolgen. Durch die Verwendung eines zusätzlichen Hilfsantriebs, bevorzugt als Elektro- oder Hydraulikmotor, dessen Energie bevorzugt durch einen Energiespeicher wie eine Batterie, einen Akku oder einen Hydraulikspeicher bereitgestellt wird, wird somit eine Rotation der Fräswalze im Wartungsbetrieb unabhängig vom Betrieb der beiden diskutierten Verbrennungsmotoren zum Antrieb ermöglicht.

Grundsätzlich kann die Arbeitsvorrichtung eine beliebige bodenbearbeitende Arbeitsvorrichtung sein. Bevorzugt umfasst oder ist die hier diskutierte Arbeitsvorrichtung eine zur Drehung um eine Fräsachse ausgebildete und angeordnete bodenabtragende Fräswalze. Auf der Außenumfangsfläche eines Fräswalzenrohrs sind über Meißelhalter oder bevorzugt Meißelwechselhalter Fräsmeißel angeordnet. Die Fräsmeißel sind zur Förderung des von ihnen aus dem Bodenverbund herausgelösten Bodenmaterials von der Fräswalze weg in der Regel wendelförmig, besonders bevorzugt als von einem Axialmittenbereich der Fräswalze bezogen auf die Fräsachse in entgegengesetzte axiale Richtungen als Doppelwendel angeordnet, wobei je eine Wendel zu jeder Seite des axialen Mittenbereich der Fräswalze von diesem weg verläuft.

Da die Motoren in der Regel eine höhere Drehzahl aufweisen als die Arbeitsvorrichtung und gleichzeitig ein niedrigeres Drehmoment liefern als für eine Bodenbearbeitung durch die Arbeitsvorrichtung erforderlich ist, überträgt das Arbeitsgetriebe bevorzugt die Leistung sowohl des ersten als auch des zweiten Motors unter Untersetzung der Drehzahl und unter Übersetzung des bei der jeweiligen Drehzahl abgegebenen Drehmoments zur Arbeitsvorrichtung.

Das Antreiben ein und desselben Arbeitsvorrichtung durch zwei im Grunde selbstständige Motoren, welche auf ihrer Ausgangsseite durch ein Arbeitsgetriebe gekoppelt sind, kann in bestimmten Betriebssituationen herausfordernd sein, um die Betriebsparameter der beiden durch das Arbeitsgetriebe kinematisch gekoppelten Motoren zu koordinieren. Dabei stellt besonders der Betrieb mit der parallelen Abgabe von Motorleistung von erstem und zweitem Motor an die Arbeitsvorrichtung Herausforderungen an die Steuerung des Betriebs der Motoren und der Arbeitsvorrichtung. Aus diesem Grunde betrifft die vorliegende Erfindung auch ein Verfahren zum Betrieb einer selbstfahrenden Bodenbearbeitungsmaschine, wie sie oben beschrieben und weitergebildet wurde, durch eine Steuervorrichtung der Bodenbearbeitungsmaschine, wobei der erste und der zweite Motor gleichzeitig Leistung an die Arbeitsvorrichtung abgeben, umfassend
a) den Schritt einer Regelung eines der beiden Motoren aus erstem und zweitem Motor auf eine durch eine Benutzereingabe oder/und durch wenigstens einen Erfassungswert eines Sensors oder/und durch Abfrage eines Datenzusammenhangs bestimmte Zieldrehzahl,
b) den Schritt einer Regelung des jeweils anderen der beiden Motoren aus erstem und zweitem Motor auf eine Bewegungsgröße aus Drehzahl und Drehmoment, wobei sich der Betrag der Bewegungsgröße des anderen Motors von dem Betrag derselben Bewegungsgröße des drehzahlgeregelten einen Motors um ein Unterschiedsverhältnis unterscheidet, welches von dem Unterschiedsverhältnis des ersten und des zweiten Übertragungsverhältnis des Arbeitsgetriebes verschieden ist.

Ausgehend von einer Eingabe des Maschinenführers oder/und von Sensorerfassungen, wobei zur Sensorerfassung auch die Erfassung eines auf die Arbeitsvorrichtung übertragenen Drehmoments oder/und eines von einem der Motoren abgegebenen Drehmoments zählt, wird einer der beiden Motoren auf eine vorbestimmte Drehzahl geregelt. Dies ist der drehzahlgeregelte der beiden Motoren. Die Drehzahl des drehzahlgeregelten Motors hängt ab von der gewünschten oder erforderlichen Soll-Arbeitsgeschwindigkeit der Arbeitsvorrichtung. Die Soll-Arbeitsgeschwindigkeit der Arbeitsvorrichtung ist in der Regel die vorgegebene Größe für eine Bodenbearbeitung. Im bevorzugten Fall einer Fräswalze als der Arbeitsvorrichtung ist deren Arbeitsgeschwindigkeit ihre Drehzahl. Die Soll-Arbeitsgeschwindigkeit kann beispielsweise abhängen von der gewünschten Vorschubgeschwindigkeit, der gewünschten Frästiefe im Falle einer Fräswalze als der Arbeitsvorrichtung und den Eigenschaften des zu bearbeitenden Bodens, wie Härte und dergleichen.

Besonders bevorzugt ist die die Steuervorrichtung im Rahmen der Steuerung des bestimmungsgemäßen Bodenbearbeitungsbetriebs der Fräswalze als der bevorzugten Arbeitsvorrichtung dazu ausgebildet, während des Betriebs der Bodenbearbeitungsmaschine Betriebsparameter wie die aktuelle Fräswalzendrehzahl oder/und das durch die Motoren abgegebene Drehmoment oder/und die Frästiefe oder/und die Vorschubgeschwindigkeit zu erfassen. Durch Auswertung dieser Maschinenparameter, beispielsweise aufgrund von hinterlegten und vorab definierten Parameterzusammenhängen, kann dann auf Eigenschaften des zu bearbeitenden Bodens geschlossen werden. Unter Berücksichtigung dieser ermittelten Eigenschaften des zu bearbeitenden Bodens kann dann wiederrum eine optimierte Drehzahl für die aktuelle Arbeitssituation zur Gewährleistung eines besonders effektiven oder/und wirtschaftlichen Betriebs ermittelt und eingestellt werden.

Der andere der beiden Motoren kann durch die Steuervorrichtung entweder auch drehzahlgeregelt sein oder kann drehmomentgeregelt sein. Um zu vermeiden, dass sich die beiden Motoren hinsichtlich ihrer Drehzahlen gegenseitig in unerwünschterweise beeinflussen, werden die beiden Motoren jeweils auf eine Zieldrehzahl geregelt, welche voneinander um ein anderes Unterschiedsverhältnis verschieden sind als das Unterschiedsverhältnis der Übertragungsverhältnisse des Arbeitsgetriebes für die beiden Motoren. Alternativ wird der andere der beiden Motoren auf ein Zieldrehmoment geregelt, welches vom Drehmoment des einen Motors, das dieser bei seiner Zieldrehzahl abgibt, um ein anderes Unterschiedsverhältnis verschieden ist als das Unterschiedsverhältnis der Übertragungsverhältnisse des Arbeitsgetriebes für die beiden Motoren.

Sofern die Ermittlung einer Bewegungsgröße eines Motors aus erstem und zweitem Motor oder der Arbeitsvorrichtung die Einbeziehung eines Übertragungsverhältnisses des Arbeitsgetriebes erfordert, wird für diesen Fall stets ein schlupffreier Betrieb des Arbeitsgetriebes unterstellt.

Die Zieldrehzahl des einen stets drehzahlgeregelten Motors ergibt sich bevorzugt ausgehend von einer erwünschten oder erforderlichen Soll-Arbeitsgeschwindigkeit der Arbeitsvorrichtung. Aus der Soll-Arbeitsgeschwindigkeit der Arbeitsvorrichtung ermittelt die Steuervorrichtung unter Anwendung des für den drehzahlgeregelten einen Motor bekannten Übertragungsverhältnisses des Arbeitsgetriebes eine Zwischenzieldrehzahl des drehzahlgeregelten Motors.

Dann, wenn auch der andere Motor aus erstem und zweitem Motor drehzahlgeregelt ist, ermittelt die Steuervorrichtung unter Anwendung des für den drehzahlgeregelten anderen Motor bekannten Übertragungsverhältnisses des Arbeitsgetriebes ebenfalls eine Zwischenzieldrehzahl des drehzahlgeregelten anderen Motors.

Die beiden so ermittelten Zwischenzieldrehzahlen verhalten sich zueinander zwangsweise wie die Übertragungsverhältnisse des Arbeitsgetriebes für die beiden Motoren. Wie von den Erfindern festgestellt wurde, kann die unmittelbare Anwendung dieser Zwischenzieldrehzahlen zu Instabilitäten im Regelungsbetrieb der beiden Motoren führen.

Um derartige Instabilitäten zu vermeiden, führt die Steuervorrichtung bevorzugt ein Finalisierungsverfahren aus, in welchem wenigstens eine Zwischenzieldrehzahl eines Motors so zu einer Zieldrehzahl verändert wird, dass sich der betragsmäßige Abstand der beiden finalisierten Zieldrehzahlen voneinander vergrößert. Hierzu kann die Steuervorrichtung wenigstens eine der nachfolgend beschriebenen Maßnahmen durchführen:
i) die betragsmäßig höhere der beiden Zwischenzieldrehzahlen wird erhöht,
ii) die betragsmäßig niedrigere der beiden Zwischenzieldrehzahlen wird verringert.

Die Erhöhung des betragsmäßigen Unterschieds der beiden Zwischenzieldrehzahlen muss dabei nicht groß sein. Eine Erhöhung der betragsmäßig höheren Zwischenzieldrehzahl um weniger als 3 % reicht als Einzelmaßnahme bei weitem aus. Ebenso reicht eine Verringerung der betragsmäßig niedrigeren Zwischenzieldrehzahl als Einzelmaßnahme um weniger als 3 % aus. Werden sowohl die höhere als auch die niedrigere Zwischenzieldrehzahl bei der Finalisierung im oben genannten Sinn verändert, kann jede der Veränderungen betragsmäßig niedriger ausfallen als bei einer Einzelmaßnahme an lediglich einer Zwischenzieldrehzahl, um die gleiche Änderung des betragsmäßigen Unterschieds der Zwischenzieldrehzahlen voneinander und dadurch die gleiche Regelungswirkung zu erzielen.

Anstelle einer prozentualen Vergrößerung des betragsmäßigen Unterschieds der Zwischenzieldrehzahlen kann dieser um einen vorbestimmten Differenzbetrag vergrößert werden, etwa um 10 bis 20 Umdrehungen pro Minute, vorzugsweise um 15 Umdrehungen pro Minute. Auch der vorbestimmte Differenzbetrag kann an nur einer Zwischenzieldrehzahl angewendet werden oder kann auf beide Zwischenzieldrehzahlen aufgeteilt werden. Hierdurch kann zwischen den beiden Motoren über das sie kinematisch koppelnde Arbeitsgetriebe eine Art "kinematische Spannung" erzeugt werden, welche beispielsweise verhindert, dass die beiden von einer gemeinsamen Steuervorrichtung betriebenen Motoren sich gegenseitig in einen unerwünschten Betriebszustand schwellender Drehzahlen manövrieren.

Zur Vereinfachung des Regelverfahrens wird bevorzugt bei der Finalisierung nur die ermittelte Zwischenzieldrehzahl eines der beiden Motoren verändert, während die ermittelte Zwischenzieldrehzahl des anderen der beiden Motoren bevorzugt als Zieldrehzahl beibehalten wird.

Die Zieldrehzahlen, auf die die Steuervorrichtung den ersten und den zweiten Motor regelt, sind dann die durch das Finalisierungsverfahren finalisierten Zwischenzieldrehzahlen.

Entsprechendes gilt für den Fall, dass der andere Motor drehmomentgeregelt ist. Die Ermittlung der Zieldrehzahl des drehzahlgeregelten einen Motors erfolgt bevorzugt wie zuvor bereits beschrieben auf Grundlage der Soll-Arbeitsgeschwindigkeit der Arbeitsvorrichtung. Die so ermittelte Zieldrehzahl ist Zielgröße des drehzahlgeregelten einen Motors.

Von der Steuervorrichtung ist bei drehmomentgeregeltem anderen Motor zunächst zu ermitteln, welches Drehmoment der drehzahlgeregelte eine Motor bei seiner Zieldrehzahl abgibt. Der ermittelte Drehmomentbetrag des drehmomentgeregelten Motors wird verändert, insbesondere verringert, um ein Zieldrehmoment für den drehmomentgeregelten anderen Motor zu erhalten. Ausgehend hiervon kann die Steuervorrichtung den drehmomentgeregelten anderen Motor in einem Betriebszustand betreiben, in welchem der andere Motor das Zieldrehmoment abgibt, welches gegenüber dem Drehmoment des drehmomentgeregelten einen Motors um den vorbestimmten Wert verändert, insbesondere verringert ist. Dabei ist wiederum das Unterschiedsverhältnis des abgegebenen Drehmoments des drehzahlgeregelten einen Motors und des Soll-Drehmoments des drehmomentgeregelten anderen Motors vom Unterschiedsverhältnis der Übertragungsverhältnisse des Arbeitsgetriebes für den ersten und den zweiten Motor verschieden. Auch dies führt zu der oben genannten "kinematischen Spannung" der beiden durch das Arbeitsgetriebe kinematisch miteinander gekoppelten Motoren. Der vorbestimmte Wert kann ein additiver bzw. subtraktiver Wert sein oder kann ein Faktor sein, etwa 95 % bezogen auf das vom einen Motor an der Arbeitsvorrichtung bewirkte Drehmoment.

Bevorzugt ist jener Motor mit dem betragsmäßig größeren drehzahluntersetzenden Übertragungsverhältnis der stets drehzahlgeregelte Motor. Der jeweils andere Motor mit dem betragsmäßig geringeren drehzahluntersetzenden Übertragungsverhältnis kann dann in Abhängigkeit von Betriebsparametern des stets drehzahlgeregelten Motors drehzahl- oder drehmomentgeregelt sein.

Das oben genannte Verfahren kann die Steuervorrichtung anwenden, wenn der erste und der zweite Motor beide über das Arbeitsgetriebe Motorleistung an die Arbeitsvorrichtung übertragen. Dies ist jedoch nicht der einzige Betriebsmodus, in welchem die Bodenbearbeitungsmaschine betrieben werden kann. Grundsätzlich kann die Steuervorrichtung die selbstfahrende Bodenbearbeitungsmaschine in wenigstens den nachfolgenden drei Betriebsmodi betreiben:
1) nur ein Motor aus erstem und zweitem Motor überträgt Drehmoment über das Arbeitsgetriebe zur Arbeitsvorrichtung und nur ein anderer Motor aus erstem und zweitem Motor überträgt Drehmoment über das Funktionsgetriebe zur wenigstens einen Funktionsvorrichtung,
2) beide Motoren aus erstem und zweitem Motor übertragen Drehmoment über das Arbeitsgetriebe zur Arbeitsvorrichtung,
3) nur ein Motor aus erstem und zweitem Motor überträgt Drehmoment sowohl über das Arbeitsgetriebe zur Arbeitsvorrichtung als auch über das Funktionsgetriebe zur wenigstens einen Funktionsvorrichtung, während der jeweils andere Motor aus erstem und zweitem Motor ausgeschaltet ist.

Das oben genannte Verfahren betrifft folglich den zuvor genannten Betriebsmodus 2).

Die vorliegende Erfindung betrifft abschließend auch eine selbstfahrende Bodenbearbeitungsmaschine, welche gemäß obiger Beschreibung aufgebaut ist und eine Steuervorrichtung aufweist, wobei die Bodenbearbeitungsmaschine, insbesondere ihre Steuervorrichtung, zur Ausführung eines Verfahrens gemäß vorstehender Beschreibung ausgebildet ist.

Nachfolgend wird die vorliegende Erfindung anhand der beiliegenden Zeichnungen näher beschrieben werden. Es stellt dar:
- Fig. 1: eine grobschematische Seitenansicht einer Bodenbearbeitungsmaschine gemäß einer Ausführungsform der vorliegenden Erfindung,
- Fig. 2: eine grobschematische Seitenansicht der Antriebsanordnung, des Arbeitsgetriebes, der Arbeitsvorrichtung und des Funktionsgetriebes der Bodenbearbeitungsmaschine von Fig. 1, und
- Fig. 3: eine grobschematische Draufsicht der Antriebsanordnung, des Arbeitsgetriebes, der Arbeitsvorrichtung und des Funktionsgetriebes der Bodenbearbeitungsmaschine von Fig. 1.

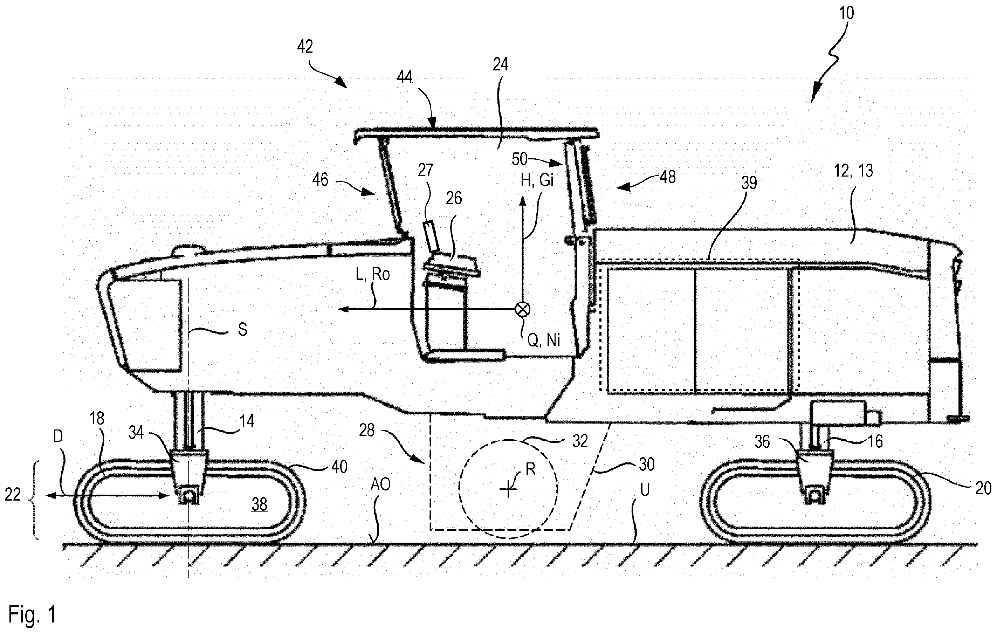

In Figur 1 ist eine erfindungsgemäße Ausführungsform einer Bodenbearbeitungsmaschine in Gestalt einer Boden- oder Straßenfräsmaschine allgemein mit 10 bezeichnet. Sie umfasst einen Maschinenrahmen 12, welcher das Grundgerüst für einen Maschinenkörper 13 bildet. Der Maschinenkörper 13 umfasst den Maschinenrahmen 12 und mit dem Maschinenrahmen 12 verbundene, gegebenenfalls relativ zu diesem bewegliche Bauteile der Maschine 10.

Der Maschinenkörper 13 umfasst vordere Hubsäulen 14 und hintere Hubsäulen 16, welche einenends mit dem Maschinenrahmen 12 und anderenends mit vorderen Laufwerken 18 bzw. mit hinteren Laufwerken 20 verbunden sind. Der Abstand des Maschinenrahmens 12 von den Laufwerken 18 und 20 ist durch die Hubsäulen 14 bzw. 16 veränderbar.

Die Laufwerke 18 und 20 sind beispielhaft als Kettenlaufwerke dargestellt. Einzelne oder alle Laufwerke 18 oder/und 20 können abweichend hiervon auch Radlaufwerke sein.

Der Betrachter von Figur 1 blickt auf die Bodenbearbeitungsmaschine oder kurz "Maschine" 10 in Richtung der zur Zeichenebene von Figur 1 orthogonalen Maschinenquerrichtung Q. Eine zur Maschinenquerrichtung Q orthogonale Maschinenlängsrichtung ist mit L bezeichnet und verläuft parallel zur Zeichenebene von Figur 1. Eine Maschinenhöhenrichtung H verläuft ebenfalls parallel zur Zeichenebene von Figur 1 und orthogonal zur Maschinenlängs- und zur Maschinenquerrichtung L bzw. Q. Die Pfeilspitze der Maschinenlängsrichtung L in Figur 1 weist in Vorwärtsrichtung. Die Maschinenhöhenrichtung H verläuft parallel zur Gierachse Gi der Maschine 10, die Maschinenlängsrichtung L verläuft parallel zur Rollachse Ro und die Maschinenquerrichtung Q verläuft parallel zur Nickachse Ni.

Die Bodenbearbeitungsmaschine 10 weist einen Fahrstand 24 auf, von dem aus ein Maschinenführer über ein Schaltpult 26 als einer Steuervorrichtung der Bodenbearbeitungsmaschine 10 die Maschine 10 steuern kann. Das Schaltpult 26 weist ein Bediendisplay 27, etwa einen Touch-Screen auf. Die Steuervorrichtung umfasst integrierte Schaltkreise sowie einen Datenspeicher.

Unter dem Maschinenrahmen 12 ist eine Arbeitsbaugruppe 28 angeordnet, hier beispielhaft als Fräsbaugruppe 28 mit einer in einem Fräswalzenkasten 30 aufgenommenen Fräswalze 32, die um eine in Maschinenquerrichtung Q verlaufende Fräsachse R rotierbar ist, um damit während einer Bodenbearbeitung Untergrundmaterial ausgehend von der Aufstandsoberfläche AO des Untergrunds U mit einer durch die relative Höhenlage des Maschinenrahmens 12 bestimmten Frästiefe abtragen zu können. Die Fräswalze 32 ist daher eine Arbeitsvorrichtung im Sinne der vorliegenden Anmeldung und ein erster Leistungsempfänger. Alternativ oder zusätzlich kann die Fräswalze 32 relativ zum Maschinenrahmen 12 höhenverstellbar an diesem aufgenommen sein.

Die Höhenverstellbarkeit des Maschinenrahmens 12 durch die Hubsäulen 14 und 16 dient in der Regel auch der Einstellung der Fräs- oder allgemein Arbeitstiefe der Maschine 10 bei der Bodenbearbeitung. Es handelt sich bei der beispielhaft dargestellten Bodenbearbeitungsmaschine 10 um eine Großfräse, für die die Anordnung der Fräsbaugruppe 28 in Maschinenlängsrichtung L zwischen den vorderen und den hinteren Laufwerken 18 bzw. 20 typisch ist. Derartige Großfräsen oder auch bodenabtragende Maschinen im Allgemeinen können ein Transportband aufweisen, um abgetragenes Bodenmaterial von der Maschine 10 weg zu transportieren. Ein auch bei der Maschine 10 grundsätzlich vorhandenes Transportband ist aus Gründen besserer Übersichtlichkeit in Figur 1 nicht dargestellt.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 14 bzw. 16 mit jeweils einem damit verbundenen Laufwerk 18 bzw. 20 aufweist. Jede vordere Hubsäule 14 ist in weiterhin an sich bekannter Weise mittels je einer Laufwerk-Verbindungsstruktur 34, etwa einer das jeweilige Laufwerk 18 in Maschinenquerrichtung Q übergreifenden Verbindungsgabel, mit dem jeweiligen Laufwerk 18 gekoppelt. Jede hintere Hubsäule 16 ist mit ihrem jeweiligen Laufwerk 20 über je eine mit der Laufwerk-Verbindungsstruktur 34 identisch aufgebaute Laufwerk-Verbindungsstruktur 36 verbunden. Die Laufwerke 18 und 20 sind im Wesentlichen identisch aufgebaut und bilden das Fahrwerk 22 der Maschine. Die Laufwerke 18 und 20 sind motorisch angetrieben, in der Regel durch einen nicht dargestellten Hydromotor.

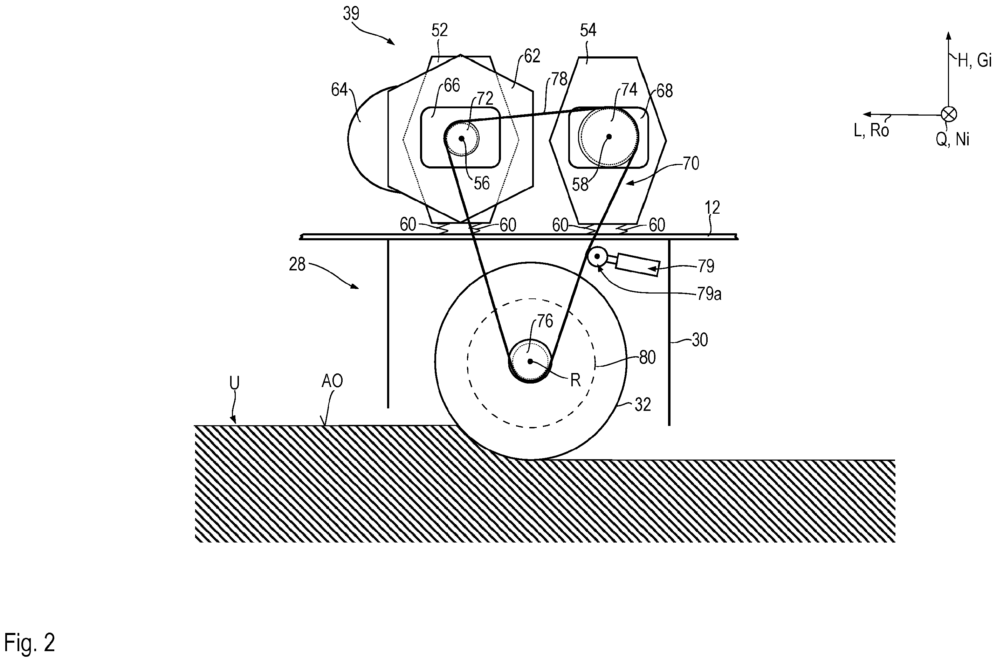

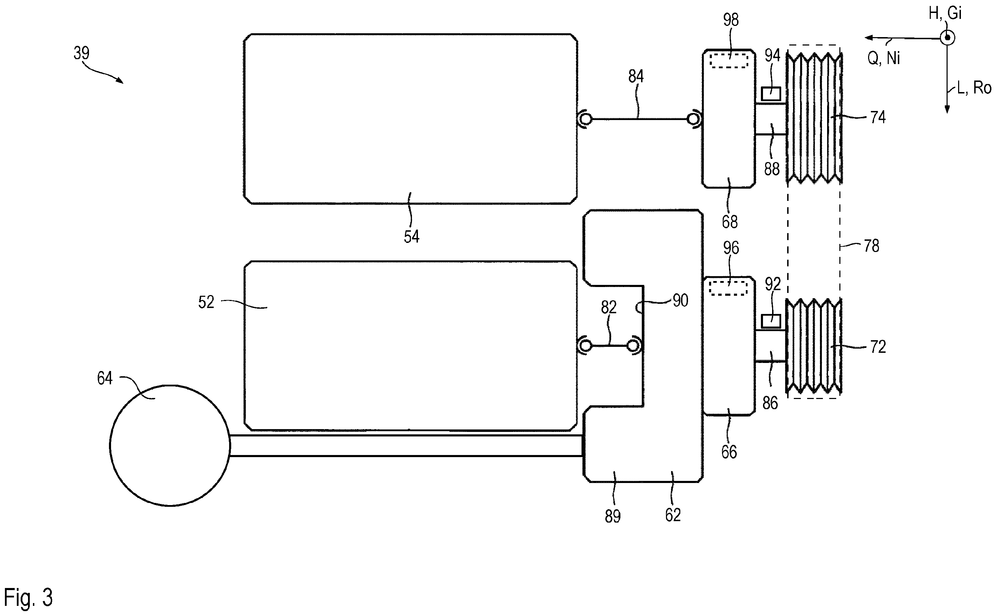

Die Antriebskraftquelle der Maschine 10 bildet eine am Maschinenrahmen 12 aufgenommene Antriebsanordnung 39, welche in den Figuren 2 und 3 näher dargestellt ist und im Zusammenhang mit diesen erläutert werden wird. Durch die Antriebsanordnung 39 wird die Fräswalze 32 im dargestellten Ausführungsbeispiel zur Drehung um die Fräsachse R angetrieben. Durch die Leistung der Antriebsanordnung 39 wird außerdem an der Maschine 10 ein Hydraulikdruckreservoir bereitgestellt, durch welches Hydromotoren und hydraulische Aktuatoren an der Maschine betreibbar sind. Die Antriebsanordnung 39 ist somit auch Quelle der Vortriebskraft der Maschine 10. Die Antriebsanordnung 39 versorgt alle im Ausführungsbeispiel genannten Leistungsempfänger mit Leistung, liefert also Arbeits-Antriebsleistung an die Fräswalze 32 und liefert Funktions-Antriebsleistung an weiter unten genannte Funktionsvorrichtungen.

Die Laufwerke 18 mit einer durch den Doppelpfeil D angedeuteten Laufrichtung weisen im dargestellten Beispiel je eine radial innere Aufnahme- und Führungsstruktur 38 auf, an der je eine umlaufbare Laufkette 40 angeordnet und zur Umlaufbewegung geführt ist.

Die vorderen Hubsäulen 14 und mit ihnen die Laufwerke 18 sind durch eine nicht näher dargestellte Lenkvorrichtung um eine Lenkachse S drehbar. Bevorzugt zusätzlich, aber auch alternativ können die Hubsäulen 16 und mit ihnen die Laufwerke 20 durch eine Lenkvorrichtung um eine zur Lenkachse S parallele Lenkachse drehbar sein.

Der Fahrstand 24 ist von einem Schutzdachaufbau 42 bedeckt, welcher ein Schutzdach 44 umfasst, das über eine vordere Scheibenanordnung 46 und eine hintere Wandungsanordnung 48 mit dem Maschinenrahmen 12 bzw. Maschinenkörper 13 verbunden ist. Das Schutzdach 44 ist mittels einer Bewegungsführung 50 heb- und senkbar am Maschinenrahmen 12 angeordnet. In Figur 1 ist das Schutzdach 44 in seiner angehobenen Betriebsstellung gezeigt, in welcher die Maschine 10 für einen Bearbeitungsbetrieb bereit ist.

In Figur 2 sind die Antriebsanordnung 39 und die mit ihr zusammenhängenden Aggregate näher dargestellt. Der Betrachter blickt in Figur 2 in derselben Richtung auf die Antriebsanordnung 39 wie in Figur 1, also parallel zur Maschinenquerrichtung Q.

Die Antriebsanordnung 39 umfasst einen ersten Dieselmotor 52 und einen zweiten Dieselmotor 54, welche nebeneinander und mit parallelen, in Maschinenquerrichtung Q verlaufenden Drehachsen 56 bzw. 58 ihrer Kurbel- bzw. Ausgangswellen, mit elastischen Motorlagern 60 am Maschinenrahmen 12 angeordnet sind.

Zwischen dem Betrachter von Figur 2 und dem ersten Dieselmotor 52 ist ein Funktionsgetriebe 62 in Gestalt eines Verteilergetriebes angeordnet, welches dauerhaft mit der Ausgangswelle des ersten Dieselmotors 52 zur Übertragung von Drehmoment gekoppelt ist. An dem Funktionsgetriebe 62 ist an einem Abtrieb eine Hydraulikpumpe 64 als eine Funktionsvorrichtung und ein weiterer Leistungsempfänger angeordnet, sodass die Hydraulikpumpe 64 stets über das Funktionsgetriebe 62 durch den ersten Dieselmotor 52 betrieben werden kann.

Zwischen dem Betrachter von Figur 2 und dem Funktionsgetriebe 62 ist eine erste schaltbare Kupplung 66 angeordnet, mit welcher eine Übertragung von Drehmoment des ersten Dieselmotors 52 unterbrochen oder hergestellt werden kann. Aufgrund der Anordnung der ersten schaltbaren Kupplung 66 im Drehmomentpfad des ersten Dieselmotors 52 hinter dem Funktionsgetriebe 62 hat der Schaltzustand der ersten schaltbaren Kupplung 66 keine Auswirkung auf eine Drehmomentübertragung des ersten Dieselmotors 52 zum Funktionsgetriebe 62.

Zwischen dem Betrachter von Figur 2 und dem zweiten Dieselmotor 54 ist eine zweite schaltbare Kupplung 68 angeordnet, mit welcher eine Übertragung von Drehmoment des zweiten Dieselmotors 54 unterbrochen oder hergestellt werden kann.

Zwischen dem Betrachter von Figur 2 und den schaltbaren Kupplungen 66 und 68 einerseits sowie der Fräswalze 32 andererseits ist ein Arbeitsgetriebe 70 angeordnet, welches ein Zugmittelgetriebe und im dargestellten Ausführungsbeispiel genauer als kraftschlüssiges Riemengetriebe umfasst.

Das Arbeitsgetriebe 70 umfasst drei Umlenkrollen 72, 74 und 76 und einen Riemen 78, welcher geschlossen um die drei Umlenkrollen 72, 74 und 76 umläuft. Ein Riemenspanner 79 sorgt dabei in an sich bekannter Weise für ausreichende Spannung des Riemens 78 und damit für ausreichende Anpresskraft im Bereich seiner Umschlingung der Umlenkrolle in 72, 74 und 76. Eine erste Umlenkrolle 72 ist dabei über die erste schaltbare Kupplung 66 mit dem ersten Dieselmotor 52 zur gemeinsamen Drehung verbunden, eine zweite Umlenkrolle 74 ist über die zweite schaltbare Kupplung 68 mit dem zweiten Dieselmotor 52 zur gemeinsamen Drehung verbunden, und eine dritte Umlenkrolle 78 ist mit der Fräswalze 32 verbunden.

Dabei sind die Durchmesser der drei Umlenkrolle 72, 74 und 76 so gewählt, dass zwischen der ersten Umlenkrolle 72 und der dritten Umlenkrolle 76 ein anderes, die Drehzahl untersetzendes und das Drehmoment übersetzendes Übertragungsverhältnis besteht als zwischen der zweiten Umlenkrolle 74 und der dritten Umlenkrolle 76.

Die Figuren 1 bis 3 sind nicht maßstabsgerecht. Es soll daran lediglich zum Ausdruck gebracht sein, dass beispielsweise die zweite Umlenkrolle 74 einen größeren Durchmesser aufweist als die erste Umlenkrolle 72, sodass die Drehzahl des zweiten Dieselmotors 54 zur Fräswalze 32 hin weniger stark untersetzt wird als die Drehzahl des ersten Dieselmotors 52. Beispielsweise wird bevorzugt die Drehzahl des ersten Dieselmotors 52 an der Fräsachse R und damit an der Fräswalze 32 auf einen Wert zwischen etwa einem Achtzehntel und einem Zwanzigstel reduziert. Die Drehzahl des zweiten Dieselmotors 54 wird beispielsweise an der Fräsachse R und damit einer Fräswalze 32 auf einen Wert zwischen etwa einem Vierzehntel und einem Sechszehntel reduziert.

Das Arbeitsgetriebe 70 kann ein weiteres zwischen der dritten Umlenkrolle 76 und der Fräswalze 32 vorgesehenes drehzahluntersetzendes Planetengetriebe 80 aufweisen, welches zu den oben genannten Übertragungsverhältnissen beiträgt. Die unterschiedlichen Übertragungsverhältnisse für den ersten und den zweiten Dieselmotor 52 bzw. 54 sind bevorzugt ausschließlich durch die Umlenkrollen 72, 74 und 76 realisiert. Das Planetengetriebe 80 überträgt Drehmoment von der dritten Umlenkrolle 76 zur Fräswalze 32 stets mit demselben Übertragungsverhältnis, unabhängig davon, welcher Dieselmotor gerade die Arbeits-Antriebsleistung liefert.

In Figur 3 ist die Anordnung von Figur 2 mit Ausnahme des Riemenspanners 79 in der Draufsicht dargestellt.

Grobschematisch ist dargestellt, dass der erste Dieselmotor 52 über eine erste elastische Wellenverbindung 82 und dass der zweite Dieselmotor 54 über eine zweite elastische Wellenverbindung 84 mit dem Funktionsgetriebe 62 bzw. mit der zweiten schaltbaren Kupplung 68 verbunden sind. Die elastische Wellenverbindung kann eine beliebige zum Ausgleich radialen Versatzes zwischen den Endbereichen einer drehenden Welle geeignete Vorrichtung sein, wie beispielsweise eine Kardan-Verbindung oder eine Elastomer-Kupplung. Da somit ein gewisser radialer Versatz im Drehmomentpfad des ersten und des zweiten Dieselmotors 52 bzw. 54, wie ihn die elastischen Motorlager 60 bewirken können, bereits durch die elastischen Wellenverbindungen 82 bzw. 84 ausgeglichen werden kann, können die erste schaltbare Kupplung 66 und die zweite schaltbare Kupplung 68 über jeweils eine starre Antriebswelle 86 bzw. 88 mit der ersten Umlenkrolle 72 bzw. mit der zweiten Umlenkrolle 74 drehfest verbunden sein.

Eine zweite Hydraulikpumpe 89 als weitere Funktionsvorrichtung und als ein noch weiterer Leistungsempfänger kann unmittelbar im Gehäuse 90 des Funktionsgetriebes 62 angeordnet sein. Dies ist sogar bevorzugt der Fall.

Aus Gründen bestmöglicher Bauraumausnutzung unter Einhaltung von Transportmaßen, welche ohne Sondergenehmigung bewegt werden dürfen, sind die beiden Dieselmotoren 52 und 54 mit parallel zur Maschinenquerrichtung Q verlaufender Kurbelwelle angeordnet. Diese bevorzugte Anordnung gilt nicht nur für das vorliegende Ausführungsbeispiel, sondern ganz grundsätzlich.

Ebenso grundsätzlich bevorzugt sind die Kurbelwellen der beiden Dieselmotoren 52 und 54 parallel zur Fräsachse R angeordnet. Weiter grundsätzlich bevorzugt sind die Drehachsen aller weiteren rotierenden Bauteile des Arbeitsgetriebe 70, also der Umlenkrolle in 72, 74 und 76 sowie aller weiteren rotierenden Bauteile des Funktionsgetriebe 62 zueinander parallel und bevorzugt sowohl zur Fräsachse R als auch zu den Kurbelwellen der Dieselmotoren 52 parallel angeordnet.

Das als Steuervorrichtung wirkende Schaltpult 26 kann die Fräswalze 32 in drei verschiedenen Betriebsmodi betreiben: ein Antrieb der Fräswalze 32 nur durch den ersten Dieselmotor 52, wobei dann gleichzeitig auch über das Funktionsgetriebe 62 die beispielhaft genannten Funktionsvorrichtungen 64 und 89 betrieben werden, etwa bei geringerer Drehzahlanforderung an die Fräswalze 32; ein Antrieb der Fräswalze 32 nur durch den zweiten Dieselmotor 54 bei höherer Drehzahlanforderung an die Fräswalze 32, wobei dann der erste Dieselmotor 52 nach wie vor über das Funktionsgetriebe 62 die beispielhaft genannten Funktionsvorrichtungen 64 und 89 betreibt; und ein Antrieb der Fräswalze 32 durch beide Dieselmotoren 52 und 54 gemeinsam bei besonders hoher Leistungsanforderung an die Fräswalze 32.

Die Steuervorrichtung kann durch Eingabe über das Bediendisplays 27 durch den Maschinenführer die Betriebsmodi selbstständig wählen, abhängig davon, wie der Maschinenführer die Eigenschaften, insbesondere die Härte, des zu bearbeitenden Bodens U beurteilt, und mit welcher Frästiefe sowie mit welcher Vorschubgeschwindigkeit er fräsen möchte. Alternativ kann die Steuervorrichtung aus erfassten Betriebsparameterwerten selbst Eigenschaften des zu bearbeitenden Bodens ermitteln und diese Ergebnisse in die Steuerung der Fräswalze 32 oder/und der beiden Dieselmotoren 52 und 54 einfließen lassen. Hierzu können in der Steuervorrichtung entsprechende Datenbanken hinterlegt sein, welche den zu bearbeitenden Boden charakterisierende Parameter sowie die gewünschten Fräsparameter Vorschubgeschwindigkeit und Frästiefe mit Betriebsparametern des ersten und des zweiten Dieselmotors 52 bzw. 54 verknüpft. Die Steuervorrichtung wählt die Betriebsmodi unter anderem durch entsprechendes Schalten der schaltbaren Kupplungen 66 und 68.

Beispielsweise kann die Steuervorrichtung dann, wenn die Fräswalze 32 durch beide Dieselmotoren 52 und 54 gemeinsam angetrieben werden soll, zunächst für den ersten Dieselmotor 52 eine für die jeweilige Fräsaufgabe gewählte Zieldrehzahl ermitteln. Da die Steuervorrichtung auf eine Datenbank zugreifen kann, in welcher das Übertragungsverhältnis der Motorleistung des ersten Dieselmotors 52 zur Fräswalze 32 hinterlegt ist, kann die Steuervorrichtung aus einer gewünschten Drehzahl der Fräswalze 32 die hierfür benötigte Drehzahl des ersten Dieselmotors 52 errechnen.

Ist der zweite Dieselmotor 54 drehmomentgeregelt, regelt die Steuervorrichtung den ersten Dieselmotor 52 auf die ermittelte Zieldrehzahl wobei die Steuervorrichtung hierzu die Drehzahl des ersten Dieselmotors 52 mit dem Drehzahlsensor 92 erfasst.

An oder nahe bei der Zieldrehzahl erfasst die Steuervorrichtung über den Drehmomentsensor 96, welcher beispielhaft in der ersten schaltbaren Kupplung 66 angeordnet sein kann, das vom ersten Dieselmotor 52 abgegebene Drehmoment.

Anschließend beginnt die Steuervorrichtung den zweiten Dieselmotor 54 hinsichtlich seines Drehmoments zu regeln. Hierzu zieht die Steuervorrichtung als Grundlage das erfasste vom ersten Dieselmotor 52 abgegebene Drehmoment heran und reduziert dessen Betrag um ein vorbestimmtes Maß. Die Reduktion des Drehmomentbetrags kann additiv durch Subtraktion einer vorbestimmten Drehmomentdifferenz, also durch Addition eines negativen Differenzbetrags erfolgen, oder kann multiplikativ durch Multiplikation mit einem Faktor erfolgen, welcher kleiner als 1 gewählt ist.

So ermittelt die Steuervorrichtung das Drehmoment betragsmäßig, welches der zweite Dieselmotor 54 abgeben soll. Mithilfe des Drehmomentsensors 98 in der zweiten schaltbaren Kupplung 68 regelt die Steuervorrichtung dann den Dieselmotor 54 so, dass er das ermittelte Soll-Drehmoment abgibt.

Alternativ kann auch der zweite Dieselmotor 54 wie der erste Dieselmotor 52 drehzahlgeregelt sein.

Auch diese Regelung geht zunächst aus von der für den ersten Dieselmotor 52 aus der Soll-Fräswalzendrehzahl ermittelten Zieldrehzahl für den ersten Dieselmotor 52. Auf Grundlage der Soll-Fräswalzendrehzahl ermittelt die Steuervorrichtung außerdem anhand des Übertragungsverhältnisses des Arbeitsgetriebes 70 für den zweiten Dieselmotor 54 eine Zieldrehzahl für den zweiten Dieselmotor 54. Im dargestellten Ausführungsbeispiel dreht bei gleicher Fräswalzendrehzahl der erste Dieselmotor 52 stets schneller als der zweite Dieselmotor 54.

Vor ihrer Anwendung werden die beiden ermittelten Zieldrehzahlen durch die Steuerungsvorrichtung finalisiert, um einen möglichst stabilen Regelungsbetrieb zu erhalten. Dabei wird der betragsmäßige Unterschied der aus der Soll-Fräswalzendrehzahl ermittelten Zieldrehzahlen vergrößert. Dies kann beispielsweise erfolgen, indem die Steuervorrichtung die Zieldrehzahl des ersten Dieselmotors 52 erhöht, beispielsweise um 15 U/min, oder die Zieldrehzahl des zweiten Dieselmotors 54 verringert, beispielsweise um 15 U/min, oder sowohl die Zieldrehzahl des ersten Dieselmotors 52 erhöht und die Zieldrehzahl des zweiten Dieselmotors 54 verringert, beispielsweise um in der Summe den Zieldrehzahlunterschied um 15 U/min zu erhöhen. Dann regelt die Steuervorrichtung den ersten Dieselmotor 52 und den zweiten Dieselmotor 54 auf deren finalisierten Zieldrehzahlen und bedient sich dabei der Drehzahlsensoren 92 und 94.

In der beschriebenen Ausführungsform ist der erste Dieselmotor 52 der stets drehzahlgeregelte Motor, auf dessen Betrieb sich die Regelung des zweiten Dieselmotors 54 stützt. Wäre dagegen bei gleichem Arbeitsgetriebe 70 der zweite Dieselmotor 54 der stets drehzahlgeregelte Motor, was ebenso möglich ist, würde der erste Dieselmotor 52 gemäß einem der obigem Verfahren unter Einhaltung der dargestellten Regelungsgrundsätze geregelt werden.

In der dargestellten Ausführungsform ist das Funktionsgetriebe 62 dauerhaft dem ersten Dieselmotor 52 mit dem betragsmäßig größeren Untersetzungsverhältnis der Drehzahl zugeordnet. Abweichend hiervon kann das Funktionsgetriebe 62 dauerhaft dem zweiten Dieselmotor 54 mit dem betragsmäßig geringeren Untersetzungsverhältnis der Drehzahl zugeordnet sein.

Nachzutragen ist, dass der Riemenspanner 79 eine motorisch angetriebene Rolle 79a aufweisen kann und so als Nebenantrieb während Wartungsarbeiten an der Fräswalze 32 dienen kann. Dadurch kann die Fräswalze mit niedriger Geschwindigkeit gedreht werden, um die Fräswalzenaußenseite zu visuell prüfen und reparatur- bzw. austauschbedürftige Bauteile, wie Fräsmeißel, Meißelhalter oder Meißelwechselhalter zu reparieren bzw. auszutauschen. Ein Fräsbetrieb ist mit dem Riemenspanner 79 als Nebenantrieb wegen des zu geringen Antriebsdrehmoments des Riemenspanners 79 allerdings nicht möglich.

## Patentansprüche

1. Selbstfahrende Bodenbearbeitungsmaschine (10), umfassend einen Maschinenrahmen (12), welcher von einem Fahrwerk (22) getragen ist, wobei das Fahrwerk (22) auf einem Untergrund (U) aufsteht und eine Mehrzahl von auf dem Untergrund (U) abrollbaren Laufwerken (18, 20) aufweist, wobei an dem Maschinenrahmen (12) eine zur Bodenbearbeitung ausgebildete Arbeitsvorrichtung (32) als ein erster Leistungsempfänger aufgenommen ist, wobei die Arbeitsvorrichtung (32) relativ zum Maschinenrahmen (12) zu einer Arbeitsbewegung antreibbar ist, wobei an dem Maschinenrahmen (12) wenigstens eine von der Arbeitsvorrichtung (32) verschiedene Funktionsvorrichtung (64, 89) als ein weiterer Leistungsempfänger aufgenommen ist, wobei am Maschinenrahmen (12) eine Antriebsanordnung (39) aufgenommen ist, welche eine Arbeits-Antriebsleistung der Arbeitsvorrichtung (32) sowie eine Funktions-Antriebsleistung der wenigstens einen Funktionsvorrichtung (64, 89) der Bodenbearbeitungsmaschine (10) bereitstellt, wobei zwischen der Antriebsanordnung (39) und der Arbeitsvorrichtung (32) ein Arbeitsgetriebe (70) angeordnet ist, um Drehmoment zwischen der Antriebsanordnung (39) und der Arbeitsvorrichtung (32) zu übertragen, und wobei zwischen der Antriebsanordnung (39) und der wenigstens einen Funktionsvorrichtung (64, 89) ein Funktionsgetriebe (62) angeordnet ist, um Drehmoment zwischen der Antriebsanordnung (39) und der wenigstens einen Funktionsvorrichtung (64, 89) zu übertragen,
wobei die Antriebsanordnung (39) einen ersten Motor (52) und einen zweiten Motor (54) umfasst, von welchen jeder durch das Arbeitsgetriebe (70) mit der Arbeitsvorrichtung (32) zur Übertragung von Drehmoment derart verbunden ist, dass die Arbeitsvorrichtung (32) zur Ausführung einer bestimmungsgemäßen Bodenbearbeitung nur durch den ersten Motor (52) oder nur durch den zweiten Motor (54) oder durch den ersten und den zweiten Motor (52, 54) gemeinsam zur Arbeitsbewegung antreibbar ist,
**dadurch gekennzeichnet, dass** das Arbeitsgetriebe (70) den ersten Motor (52) mit einem ersten Übertragungsverhältnis mit der Arbeitsvorrichtung (32) verbindet und den zweiten Motor (54) mit einem vom ersten verschiedenen zweiten Übertragungsverhältnis mit der Arbeitsvorrichtung (32) verbindet.

2. Selbstfahrende Bodenbearbeitungsmaschine (10) nach Anspruch 1,
**dadurch gekennzeichnet, dass** die unterschiedlichen Übertragungsverhältnisse des Arbeitsgetriebes (70) im Zusammenwirken mit dem ersten und dem zweiten Motor (52, 54) durch rotierende Getriebebauteile (72, 74) mit jeweils unterschiedlichen wirksamen Durchmessern bewirkt sind, wobei ein erstes rotierendes Getriebebauteil (72) mit einem ersten wirksamen Durchmesser zur gemeinsamen Drehung mit dem ersten Motor (52) verbunden ist und wobei ein zweites rotierendes Getriebebauteil (74) mit einem vom ersten verschiedenen zweiten wirksamen Durchmesser zur gemeinsamen Drehung mit dem zweiten Motor (54) verbunden ist, wobei das erste rotierende Getriebebauteil (72) im Drehmomentpfad vom ersten Motor (52) zum zweiten rotierenden Getriebebauteil (74) zwischen dem ersten Motor (52) und dem zweiten rotierenden Getriebebauteil (74) gelegen ist und wobei das zweite rotierende Getriebebauteil (74) im Drehmomentpfad vom zweiten Motor (54) zum ersten rotierenden Getriebebauteil (72) zwischen dem zweiten Motor (54) und dem ersten rotierenden Getriebebauteil (72) gelegen ist.

3. Selbstfahrende Bodenbearbeitungsmaschine (10) nach einem der Ansprüche 1 oder 2,
**dadurch gekennzeichnet, dass** das Arbeitsgetriebe (70) ein Zugmittelgetriebe umfasst oder ist.

4. Selbstfahrende Bodenbearbeitungsmaschine (10) nach den Ansprüchen 2 und 3,
**dadurch gekennzeichnet, dass** das erste rotierende Getriebebauteil (72) wenigstens ein Getriebebauteil ist aus
i) einer ersten ein Zugmittel des Zugmittelgetriebes umlenkenden Umlenkrolle (72) und
ii) einem ersten in einem Drehmomentpfad vom ersten Motor (52) zur ersten Umlenkrolle (72) angeordneten Zahnrad oder Reibrad, oder/und dass das zweite rotierende Getriebebauteil (74) wenigstens ein Getriebebauteil ist aus
iii) einer zweiten ein Zugmittel des Zugmittelgetriebes umlenkenden Umlenkrolle (74) und
iv) einem zweiten in einem Drehmomentpfad vom zweiten Motor (54) zur zweiten Umlenkrolle (74) angeordneten Zahnrad oder Reibrad.

5. Selbstfahrende Bodenbearbeitungsmaschine (10) nach einem der vorhergehenden Ansprüche,
**dadurch gekennzeichnet, dass** in einem ersten Drehmomentpfad zwischen dem ersten Motor (52) und der Arbeitsvorrichtung (32) eine erste schaltbare Kupplung (66) angeordnet ist, um den ersten Drehmomentpfad abhängig vom Schaltzustand der ersten schaltbaren Kupplung (66) zu unterbrechen oder zu schließen, oder/und dass in einem zweiten Drehmomentpfad zwischen dem zweiten Motor (54) und der Arbeitsvorrichtung (32) eine zweite schaltbare Kupplung (68) angeordnet ist, um den zweiten Drehmomentpfad abhängig vom Schaltzustand der zweiten schaltbaren Kupplung (68) zu unterbrechen oder zu schließen.

6. Selbstfahrende Bodenbearbeitungsmaschine (10) nach Anspruch 5,
**dadurch gekennzeichnet, dass** für einen Motor (52) aus erstem und zweitem Motor (52, 54) gilt, dass die in dem Drehmomentpfad zwischen dem einen Motor (52) und der Arbeitsvorrichtung angeordnete schaltbare Kupplung (66) abhängig von ihrem Schaltzustand eine Übertragung von Drehmoment von dem einen Motor (52) zur Arbeitsvorrichtung (32) unterbricht, aber eine Übertragung von Drehmoment von dem einen Motor (52) zum Funktionsgetriebe (62) nicht unterbricht, wobei für den jeweils anderen Motor (54) aus erstem und zweitem Motor (52, 54) gilt, dass die in dem Drehmomentpfad zwischen dem anderen Motor (54) und der Arbeitsvorrichtung (32) angeordnete schaltbare Kupplung (68) abhängig von ihrem Schaltzustand sowohl eine Übertragung von Drehmoment von dem anderen Motor (54) zur Arbeitsvorrichtung (32) als auch zum Funktionsgetriebe (62) unterbricht.

7. Selbstfahrende Bodenbearbeitungsmaschine (10) nach einem der vorhergehenden Ansprüche,
**dadurch gekennzeichnet, dass** das Funktionsgetriebe (62) ein Verteilergetriebe ist, dessen Anzahl an Ausgangswellen größer als dessen Anzahl an Eingangswellen ist.

8. Selbstfahrende Bodenbearbeitungsmaschine (10) nach einem der vorhergehenden Ansprüche,
**dadurch gekennzeichnet, dass** die wenigstens eine Funktionsvorrichtung (64, 89) wenigstens eine Flüssigkeitspumpe (64, 89) oder/und wenigstens eine Gaspumpe oder/und wenigstens einen elektrischen Generator oder/und wenigstens einen mechanischen Hilfsantrieb umfasst.

9. Selbstfahrende Bodenbearbeitungsmaschine (10) nach einem der vorhergehenden Ansprüche,
**dadurch gekennzeichnet, dass** die Arbeitsvorrichtung (32) eine zur Drehung um eine Fräsachse (R) ausgebildete und angeordnete bodenabtragende Fräswalze (32) umfasst.

10. Selbstfahrende Bodenbearbeitungsmaschine (10) nach einem der vorhergehenden Ansprüche,
**dadurch gekennzeichnet, dass** das Arbeitsgetriebe (70) die Leistung sowohl des ersten als auch des zweiten Motors (52, 54) unter Untersetzung der Drehzahl und unter Übersetzung des bei der jeweiligen Drehzahl abgegebenen Drehmoments zur Arbeitsvorrichtung (32) überträgt.

11. Verfahren zum Betrieb einer selbstfahrenden Bodenbearbeitungsmaschine (10) nach einem der vorhergehenden Ansprüche durch eine Steuervorrichtung (26) der Bodenbearbeitungsmaschine (10), wobei der erste und der zweite Motor (52, 54) gleichzeitig Leistung an die Arbeitsvorrichtung (32) abgeben, umfassend
a) den Schritt einer Regelung der Drehzahl eines der beiden Motoren aus erstem und zweitem Motor (52, 54) auf eine unter Berücksichtigung einer Benutzereingabe oder/und wenigstens eines Erfassungswerts eines Sensors (92, 94, 96, 98) oder/und einer Abfrage eines Datenzusammenhangs bestimmte Zieldrehzahl,
b) den Schritt einer Regelung des jeweils anderen der beiden Motoren aus erstem und zweitem Motor (52, 54) auf eine Bewegungsgröße aus Drehzahl und Drehmoment, wobei sich der Betrag der Bewegungsgröße des anderen Motors von dem Betrag derselben Bewegungsgröße des drehzahlgeregelten einen Motors um ein Unterschiedsverhältnis unterscheidet, welches von dem Unterschiedsverhältnis des ersten und des zweiten Übertragungsverhältnis des Arbeitsgetriebes (70) verschieden ist.

12. Verfahren nach Anspruch 11,
**dadurch gekennzeichnet, dass** der jeweils andere Motor durch die Steuervorrichtung (26) ebenfalls drehzahlgeregelt ist, wobei die Steuervorrichtung ausgehend von einer durch eine Benutzereingabe oder/und durch wenigstens einen Erfassungswert eines Sensors (92, 94, 96, 98) oder/und durch Abfrage eines Datenzusammenhangs bestimmten Soll-Arbeitsgeschwindigkeit der Arbeitsvorrichtung (32) unter Berücksichtigung des Übertragungsverhältnisses des Arbeitsgetriebes (70) für den ersten Motor (52) eine erste Zwischenzieldrehzahl für den ersten Motor (52) ermittelt und unter Berücksichtigung des Übertragungsverhältnisses des Arbeitsgetriebes (70) für den zweiten Motor (52) eine zweite Zwischenzieldrehzahl für den zweiten Motor (52) ermittelt, wobei die Steuervorrichtung die erste oder/und die zweite Zwischenzieldrehzahl in einem Finalisierungsverfahren derart betragsmäßig zu einer ersten und einer zweiten Zieldrehzahl verändert, dass der betragsmäßige Unterschied zwischen der finalisierten ersten und der finalisierten zweiten Zieldrehzahl nach dem Finalisierungsverfahren größer ist als zwischen den nur aus der Soll-Arbeitsgeschwindigkeit der Arbeitsvorrichtung (32) und den Übertragungsverhältnissen des Arbeitsgetriebes (70) errechneten ersten und zweiten Zwischenzieldrehzahlen.

13. Verfahren nach Anspruch 11,
**dadurch gekennzeichnet, dass** der jeweils andere Motor durch die Steuervorrichtung (32) drehmomentgeregelt ist, wobei die Steuervorrichtung (26) das vom drehzahlgeregelten Motor abgegebene Drehmoment ermittelt, und wobei das Soll-Drehmoment des drehmomentgeregelten Motors von der Steuervorrichtung (26) niedriger gewählt wird als das Drehmoment des drehzahlgeregelten Motors, wobei das Unterschiedsverhältnis des abgegebenen Drehmoments des drehzahlgeregelten einen Motors und des Soll-Drehmoments des drehmomentgeregelten anderen Motors vom Unterschiedsverhältnis der Übertragungsverhältnisse des Arbeitsgetriebes (70) für den ersten und den zweiten Motor (52, 54) verschieden sind.

14. Verfahren nach einem der Ansprüche 11 bis 13,
**dadurch gekennzeichnet, dass** die Steuervorrichtung (70) die selbstfahrende Bodenbearbeitungsmaschine (10) in wenigstens den nachfolgenden drei Betriebsmodi betreiben kann:
1) nur ein Motor (54) aus erstem und zweitem Motor (52) überträgt Drehmoment über das Arbeitsgetriebe (70) zur Arbeitsvorrichtung (32) und nur ein anderer Motor (52) aus erstem und zweitem Motor (52, 54) überträgt Drehmoment über das Funktionsgetriebe (62) zur wenigstens einen Funktionsvorrichtung (64, 89),
2) beide Motoren aus erstem und zweitem Motor (52, 54) übertragen Drehmoment über das Arbeitsgetriebe (70) zur Arbeitsvorrichtung (32),
3) nur ein Motor (52) aus erstem und zweitem Motor (52, 54) überträgt Drehmoment sowohl über das Arbeitsgetriebe (70) zur Arbeitsvorrichtung (32) als auch über das Funktionsgetriebe (62) zur wenigstens einen Funktionsvorrichtung (64, 89), während der jeweils andere Motor (54) aus erstem und zweitem Motor (52, 54) ausgeschaltet ist.

15. Selbstfahrende Bodenbearbeitungsmaschine (10) nach einem der Ansprüche 1 bis 10,
**dadurch gekennzeichnet, dass** sie eine Steuervorrichtung (26) aufweist und zur Ausführung eines Verfahrens nach einem der Ansprüche 11 bis 14 ausgebildet ist.

## Claims

1. A self-propelled earth working machine (10), comprising a machine frame (12), which is supported by a traveling gear (22), the traveling gear (22) standing on a ground (U) and comprising a plurality of drive units (18, 20) rollable on the ground (U), a working apparatus (32) designed for earth working operation being accommodated on the machine frame (12) as a first power recipient, the working apparatus (32) being drivable to perform a working movement relative to the machine frame (12), at least one function apparatus (64, 89) distinct from the working apparatus (32) being accommodated on the machine frame (12) as a further power recipient, a drive system (39) being accommodated on the machine frame (12), which provides a working drive power to the working apparatus (32) and a function drive power to the at least one function apparatus (54, 89) of the earth working machine (10), a working transmission (70) being situated between the drive system (39) and the working apparatus (32) in order to transmit torque between the drive system (39) and the working apparatus (32), and a function transmission (62) being situated between the drive system (39) and the at least one function apparatus (64, 89) in order to transmit torque between the drive system (39) and the at least one function apparatus (64, 89),
the drive system (39) comprising a first motor (52) and a second motor (54), each of which is connected by the working transmission (70) to the working apparatus (32) for the transmission of torque in such a way that the working apparatus (32) for performing a normal earth working operation may be driven to perform a working movement solely by the first motor (52) or solely by the second motor (54) or jointly by the first and the second motor (52, 54), **characterized in that** the working transmission (70) connects the first motor (52) to the working apparatus (32) at a first transmission ratio and connects the second motor (54) to the working apparatus (32) at a second transmission ratio different from the first transmission ratio.

2. The self-propelled earth working machine (10) as recited in Claim 1, **characterized in that** the different transmission ratios of the working transmission (70) are brought about in the cooperation with the first and the second motor (52, 54) by rotating transmission components (72, 74) respectively having different effective diameters, a first rotating transmission component (72) having a first effective diameter being connected to the first motor (52) for joint rotation and a second rotating transmission component (74) having a second effective diameter different from the first being connected to the second motor (54) for joint rotation, the first rotating transmission component (72) being situated in the torque path from the first motor (52) to the second rotating transmission component (74) between the first motor (52) and the second rotating transmission component (74) and the second rotating transmission component (74 being situated in the torque path from the second motor (54) to the first rotating transmission component (72) between the second motor (54) and the first rotating transmission component (72).

3. The self-propelled earth working machine (10) as recited in one of Claims 1 or 2,
**characterized in that** the working transmission (70) comprises or is a traction drive.

4. The self-propelled earth working machine (10) as recited in Claims 2 and 3, **characterized in that** the first rotating transmission component (72) is at least one transmission component of
i) a first deflection pulley (72) deflecting a traction means of the traction drive and
ii) a first toothed wheel or friction wheel situated in a torque path from the first motor (52) to the first deflection pulley (72),
and/or **in that** the second rotating transmission component (74) is at least one transmission component of
iii) a second deflection pulley (74) deflecting a traction means of the traction drive and
iv) a second toothed wheel or friction wheel situated in a torque path from the second motor (54) to the second deflection pulley (74).

5. The self-propelled earth working machine (10) as recited in one of the preceding claims,
**characterized in that** a first switchable clutch (66) is situated in a first torque path between the first motor (52) and the working apparatus (32) in order to interrupt or to close the first torque path as a function of the switching state of the first switchable clutch (66), and/or **in that** a second switchable clutch (68) is situated in a second torque path between the second motor (54) and the working apparatus (32) in order to interrupt or to close the second torque path as a function of the switching state of the second switchable clutch (68).

6. The self-propelled earth working machine (10) as recited in Claim 5, **characterized in that** for one motor (52) of the first and second motors (52, 54) it is the case that the switchable clutch (66) situated in the torque path between the one motor (52) and the working apparatus interrupts a transmission of torque from the one motor (52) to the working apparatus (32) as a function of its switching state, but it does not interrupt a transmission of torque from the one motor (52) to the function transmission (62), it being the case for the respective other motor (54) of the first and second motors (52, 54) that the switchable clutch (68) situated in the torque path between the other motor (54) and the working apparatus (32) interrupts both a transmission of torque from the other motor (54) to the working apparatus (32) as well as to the function transmission (62) as a function of its switching state.

7. The self-propelled earth working machine (10) as recited in one of the preceding claims,
**characterized in that** the function transmission (62) is a distributor transmission, the number of output shafts of which is greater than its number of input shafts.

8. The self-propelled earth working machine (10) as recited in one of the preceding claims,
**characterized in that** the at least one function apparatus (64, 89) comprises at least one liquid pump (64, 89) and/or at least one gas pump and/or at least one electrical generator and/or at least one mechanical auxiliary drive.

9. The self-propelled earth working machine (10) as recited in one of the preceding claims,
**characterized in that** the working apparatus (32) comprises an earth-removing milling drum (32) that is designed and situated to rotate about a milling axis (R).

10. The self-propelled earth working machine (10) as recited in one of the preceding claims,
**characterized in that** the working transmission (70) transmits the power output both of the first as well as of the second motor (52, 54) to the working apparatus (32), while reducing the rotational speed and while stepping up the torque output at the respective rotational speed.

11. A method for the operation of a self-propelled earth working machine (10) as recited in one of the preceding claims by a control device (26) of the earth working machine (10), the first and the second motor (52, 54) simultaneously outputting power to the working apparatus (32), comprising
a) the step of controlling the rotational speed of one of the two motors of the first and second motors (52, 54) to a target rotational speed determined by taking into account a user input and/or at least one acquired value of a sensor (92, 94, 96, 98) and/or a query of a data relationship,
b) the step of controlling the respective other of the two motors of the first and second motors (52, 54) to a movement variable of rotational speed and torque, the value of the movement variable of the other motor differing from the value of the same movement variable of the rotational-speed-controlled one motor by a differential ratio, which differs from the differential ratio of the first and of the second transmission ratio of the working transmission (70).

12. The method as recited in Claim 11,
**characterized in that** the respective other motor is likewise rotational-speed-controlled by the control device (26), the control device ascertaining a first intermediate target rotational speed for the first motor (52) starting from a setpoint working rotational speed of the working apparatus (32) determined by a user input and/or by at least one acquired value of a sensor (92, 94, 96, 98) and/or by query of a data relationship by taking into account the transmission ratio of the working transmission (70) for the first motor (52) and ascertaining a second intermediate target rotational speed for the second motor (52) by taking into account the transmission ratio of the working transmission (70) for the second motor, the control device modifying the first and/or the second intermediate target rotational speed in a finalization process to a first and a second target rotational speed in such a way that the difference between the finalized first and the finalized second target rotational speed is greater after the finalization process than between the first and second intermediate target rotational speeds calculated only from the setpoint working rotational speed of the working apparatus (32) and the transmission ratios of the working transmission (70).

13. The method as recited in Claim 11,
**characterized in that** the respective other motor is torque-controlled by the control device (26), the control device (26) ascertaining the torque output by the rotational-speed-controlled motor, and the setpoint torque of the torque-controlled motor being selected by the control device (26) to be lower than the torque of the rotational-speed-controlled motor, the differential ratio of the output torque of the rotational-speed-controlled one motor and of the setpoint torque of the torque-controlled other motor differing from the differential ratio of the transmission ratios of the working transmission (70) for the first and the second motor (52, 54).

14. The method as recited in one of Claims 11 through 13,
**characterized in that** the control device (26) is able to operate the self-propelled earth working machine (10) in at least the following three operating modes:
1) only one motor (54) of the first and second motors (52) transmits torque via the working transmission (70) to the working apparatus (32) and only one other motor (52) of the first and second motors (52, 54) transmits torque via the function transmission (62) to the at least one function apparatus (64, 89),
2) both motors of the first and second motors (52, 54) transmit torque via the working transmission (70) to the working apparatus (32),
3) only one motor (52) of the first and second motors (52, 54) transmits torque both via the working transmission (70) to the working apparatus (32) as well as via the function transmission (62) to the at least one function apparatus (64, 89), while the respective other motor (54) of the first and second motors (52, 54) is switched off.

15. The self-propelled earth working machine (10) as recited in one of Claims 1 through 10,
**characterized in that** it comprises a control device (26) and is designed to carry out a method as recited in one of the Claims 11 through 14.

## Revendications

1. Machine automotrice pour le travail du sol (10), comprenant un châssis de machine (12) qui est supporté par un train de roulement (22), le train de roulement (22) reposant sur un terrain (U) et présentant une pluralité de trains de roulement (18, 20) pouvant rouler sur le terrain (U) , le châssis de machine (12) comportant un dispositif de travail (32) conçu pour le travail du sol en tant que premier récepteur de puissance, le dispositif de travail (32) pouvant être entraîné par rapport au châssis de machine (12) pour effectuer un mouvement de travail, le châssis de machine (12) comportant au moins un dispositif fonctionnel (64, 89), différent du dispositif de travail (32), reçu sur le châssis de machine (12) en tant qu'autre récepteur de puissance, un agencement d'entraînement (39) étant reçu sur le châssis de machine (12), lequel fournit une puissance d'entraînement de travail du dispositif de travail (32) ainsi qu'une puissance d'entraînement fonctionnelle du au moins un dispositif fonctionnel (64, 89) de la machine de travail du sol (10), un transmission de travail (70) étant disposé entre le agencement d'entraînement (39) et le dispositif de travail (32) afin de transmettre du couple entre le agencement d'entraînement (39) et le dispositif de travail (32), et un transmission fonctionnel (62) étant disposé entre le agencement d'entraînement (39) et le au moins un dispositif fonctionnel (64, 89) afin de transmettre du couple entre l'agencement d'entraînement (39) et le au moins un dispositif fonctionnel (64, 89),
l'agencement d'entraînement (39) comprenant un premier moteur (52) et un deuxième moteur (54) dont chacun est relié par la transmission de travail (70) avec le dispositif de travail (32) pour transmettre du couple de telle sorte que le dispositif de travail (32) puisse être entraîné pour effectuer un travail de sol conforme à sa destination uniquement par le premier moteur (52) ou uniquement par le deuxième moteur (54) ou par le premier et le deuxième moteur (52, 54) conjointement pour effectuer un mouvement de travail, **caractérisée en ce que** la transmission de travail (70) connecte le premier moteur (52) au dispositif de travail (32) avec un premier rapport de transmission et connecte le deuxième moteur (54) au dispositif de travail (32) avec un deuxième rapport de transmission différent du premier.

2. Machine automotrice de travail du sol (10) selon la revendication 1, **caractérisée en ce que** les différents rapports de transmission de la transmission de travail (70) en coopération avec les premier et deuxième moteurs (52, 54) sont assurés par des composants de transmission rotatifs (72, 74) ayant chacun des diamètres effectifs différents, un premier élément de transmission rotatif (72) ayant un premier diamètre effectif étant connecté au premier moteur (52) pour tourner conjointement avec celui-ci, et un deuxième élément de transmission rotatif (74) ayant un deuxième diamètre effectif différent du premier étant connecté au deuxième moteur (54) pour tourner conjointement avec celui-ci, le premier élément de transmission rotatif (72) étant situé dans le chemin de couple entre le premier moteur (52) et le deuxième élément de transmission rotatif (74), entre le premier moteur (52) et le deuxième élément de transmission rotatif (74), et dans lequel le deuxième élément rotatif de transmission (74) est situé dans le chemin de couple entre le deuxième moteur (54) et le premier élément rotatif de transmission (72), entre le deuxième moteur (54) et le premier élément rotatif de transmission (72).

3. Machine automotrice de travail du sol (10) selon l'une des revendications 1 ou 2,
**caractérisée en ce que** la transmission de travail (70) comprend ou est une transmission à moyen de traction.

4. Machine automotrice de travail du sol (10) selon les revendications 2 et 3, **caractérisée en ce que** le premier élément rotatif de transmission (72) est au moins un élément de transmission parmi
i) une première poulie de renvoi (72) renvoyant un moyen de traction de la transmission à moyen de traction, et
ii) une première roue dentée ou roue à friction disposée dans un chemin de couple entre le premier moteur (52) et la première poulie de renvoi (72), ou/et **en ce que** le deuxième élément rotatif de transmission (74) est au moins un élément de transmission parmi
iii) une deuxième poulie de renvoi (74) renvoyant un moyen de traction de la transmission à moyen de traction et
iv) une deuxième roue dentée ou roue à friction disposée dans un chemin de couple entre le deuxième moteur (54) et la deuxième poulie de renvoi (74).

5. Machine automotrice de travail du sol (10) selon l'une des revendications précédentes,
**caractérisée en ce qu'**un premier embrayage commutable (66) est agencé dans un premier chemin de couple entre le premier moteur (52) et le dispositif de travail (32) afin d'interrompre ou de fermer le premier chemin de couple en fonction de l'état de commutation du premier embrayage commutable (66), et/ou qu'un deuxième embrayage commutable (68) est agencé dans un deuxième chemin de couple entre le deuxième moteur (54) et le dispositif de travail (32) afin d'interrompre ou de fermer le deuxième chemin de couple en fonction de l'état de commutation du deuxième embrayage commutable (68).

6. Machine automotrice de travail du sol (10) selon la revendication 5, **caractérisée en ce que**, pour un moteur (52) parmi les premier et deuxième moteurs (52, 54), l'embrayage commutable (66) disposé dans le chemin de couple entre ledit moteur (52) et le dispositif de travail interrompt la transmission du couple dudit moteur (52) (52) vers le dispositif de travail (32), mais n'interrompt pas la transmission du couple du premier moteur (52) vers la transmission fonctionnelle (62), dans lequel pour l'autre moteur (54) parmi le premier et le deuxième moteur (52, 54), l'embrayage commutable (68) disposé dans le chemin de couple entre l'autre moteur (54) et le dispositif de travail (32) interrompt, en fonction de son état de commutation, à la fois la transmission du couple de l'autre moteur (54) vers le dispositif de travail (32) et vers la transmission fonctionnelle (62).

7. Machine automotrice de travail du sol (10) selon l'une des revendications précédentes,
**caractérisée en ce que** la transmission fonctionnelle (62) est une boîte de transfert dont le nombre d'arbres de sortie est supérieur à son nombre d'arbres d'entrée.

8. Machine automotrice de travail du sol (10) selon l'une des revendications précédentes,
**caractérisée en ce que** le ou les dispositifs fonctionnels (64, 89) comprennent au moins une pompe à liquide (64, 89) et/ou au moins une pompe à gaz et/ou au moins un générateur électrique et/ou au moins un entraînement auxiliaire mécanique.

9. Machine automotrice de travail du sol (10) selon l'une des revendications précédentes,
**caractérisée en ce que** le dispositif de travail (32) comprend un tambour de fraisage (32) conçu et agencé pour tourner autour d'un axe de fraisage (R) et pour enlever du sol.

10. Machine automotrice de travail du sol (10) selon l'une des revendications précédentes,
**caractérisée en ce que** la transmission de travail (70) transmet la puissance des premier et deuxième moteurs (52, 54) au dispositif de travail (32) en réduisant la vitesse de rotation et en augmentant le couple délivré à la vitesse de rotation respective.

11. Procédé pour faire fonctionner une machine automotrice de travail du sol (10) selon l'une des revendications précédentes à l'aide d'un dispositif de commande (26) de la machine de travail du sol (10), le premier et le deuxième moteur (52, 54) délivrant simultanément leur puissance au dispositif de travail (32), comprenant
a) l'étape consistant à réguler la vitesse de rotation de l'un des deux moteurs parmi le premier et le deuxième moteur (52, 54) à une vitesse de rotation cible déterminée en tenant compte d'une entrée utilisateur et/ou d'au moins une valeur de détection d'un capteur (92, 94, 96, 98) et/ou d'une interrogation d'un contexte de données,
b) l'étape consistant à réguler l'autre des deux moteurs parmi le premier et le deuxième moteur (52, 54) à une grandeur de mouvement parmi la vitesse de rotation et le couple, la valeur de la grandeur de mouvement de l'autre moteur différant de la valeur de la même grandeur de mouvement du moteur régulé en vitesse de rotation d'un rapport de différence qui est différent du rapport de différence entre le premier et le deuxième rapport de transmission de la transmission de travail (70).

12. Procédé selon la revendication 11,
**caractérisé en ce que** l'autre moteur est également régulé en vitesse de rotation par le dispositif de commande (26), le dispositif de commande déterminant, à partir d'une vitesse de travail de consigne du dispositif de travail (32) déterminée à partir d'une entrée utilisateur et/ou d'au moins une valeur de détection d'un capteur (92, 94, 96, 98) ou/et par interrogation d'un contexte de données, en tenant compte du rapport de transmission de la transmission de travail (70) pour le premier moteur (52), détermine une première vitesse de rotation cible intermédiaire pour le premier moteur (52) et, en tenant compte du rapport de transmission de la transmission de travail (70) pour le deuxième moteur (52), détermine une deuxième vitesse de rotation cible intermédiaire pour le deuxième moteur (52), le dispositif de commande modifiant la première et/ou la deuxième vitesse de rotation cible intermédiaire dans une procédure de finalisation de telle sorte que la différence en valeur absolue entre la première vitesse de rotation cible finalisée et la deuxième vitesse de rotation cible finalisée après la procédure de finalisation soit supérieure à la différence en valeur absolue entre la vitesse de travail de consigne de l'appareil de travail (32) et la valeur de détection d'un capteur (92, 94, 96, 98) de telle sorte que la différence en valeur absolue entre la première vitesse de rotation cible finalisée et la deuxième vitesse de rotation cible finalisée après le processus de finalisation soit supérieure à celle entre les première et deuxième vitesses de rotation cibles intermédiaires calculées uniquement à partir de la vitesse de travail de consigne du dispositif de travail (32) et des rapports de transmission de la transmission de travail (70).

13. Procédé selon la revendication 11,
**caractérisé en ce que** l'autre moteur est régulé en couple par le dispositif de commande (32), le dispositif de commande (26) déterminant le couple délivré par le moteur régulé en vitesse de rotation, et le couple de consigne du moteur régulé en couple étant sélectionné par le dispositif de commande (26) est sélectionné à une valeur inférieure au couple du moteur régulé en vitesse de rotation, le rapport de différence entre le couple délivré par le moteur régulé en vitesse de rotation et le couple de consigne de l'autre moteur régulé en couple étant différent du rapport de différence entre les rapports de transmission de la transmission de travail (70) pour le premier et le deuxième moteur (52, 54).

14. Procédé selon l'une des revendications 11 à 13,
**caractérisé en ce que** le dispositif de commande (70) peut faire fonctionner la machine automotrice de travail du sol (10) dans au moins les trois modes de fonctionnement suivants :
1) un seul moteur (54) parmi le premier et le deuxième moteur (52) transmet du couple via la transmission de travail (70) au dispositif de travail (32) et un seul autre moteur (52) parmi le premier et le deuxième moteur (52, 54) transmet du couple via la transmission fonctionnelle (62) à au moins un dispositif fonctionnel (64, 89),
2) les deux moteurs parmi les premier et deuxième moteurs (52, 54) transmettent du couple via la transmission de travail (70) au dispositif de travail (32),
3) un seul moteur (52) parmi le premier et le deuxième moteur (52, 54) transmet le couple à la fois au dispositif de travail (32) via la transmission de travail (70) et au moins un dispositif fonctionnel (64, 89) via la transmission fonctionnelle (62), tandis que l'autre moteur (54) parmi les premier et deuxième moteurs (52, 54) est désactivé.

15. Machine automotrice de travail du sol (10) selon l'une des revendications 1 à 10,
**caractérisée en ce qu'**elle comprend un dispositif de commande (26) et est conçue pour exécuter un procédé selon l'une des revendications 11 à 14.
